# EUROPEAN PATENT APPLICATION

(11) **EP 4 794 428 A1**
(43) Date of publication of application: **19.08.2026**
(21) Application number: 24880224.1
(22) Date of filing: 19.09.2024
(51) Int. Cl.: H04W 72/27, H04W 24/02, H04L 5/00, H04W 76/15, H04W 72/56, H04W 88/08

(54) **ELECTRONIC DEVICE AND METHOD FOR COMMUNICATION BETWEEN DISTRIBUTED UNITS IN WIRELESS COMMUNICATION SYSTEM**

(30) Priority: 17.10.2023 KR 20230139018; 04.03.2024 KR 20240030988
(71) Applicant: Samsung Electronics Co., Ltd., Suwon-si, Gyeonggi-do 16677 (KR)
(72) Inventor: LEE, Neunghyung, Suwon-si Gyeonggi-do 16677 (KR); BAEK, Jooyoung, Suwon-si Gyeonggi-do 16677 (KR); SEO, Inkwon, Suwon-si Gyeonggi-do 16677 (KR); KIM, Myoungseok, Suwon-si Gyeonggi-do 16677 (KR); KIM, Soohyun, Suwon-si Gyeonggi-do 16677 (KR); YANG, Chanseok, Suwon-si Gyeonggi-do 16677 (KR); LEE, Jungseop, Suwon-si Gyeonggi-do 16677 (KR); LEE, Hongju, Suwon-si Gyeonggi-do 16677 (KR); CHO, Heenam, Suwon-si Gyeonggi-do 16677 (KR); HEO, Eunhye, Suwon-si Gyeonggi-do 16677 (KR)
(74) Representative: Gulde & Partner
(86) International application number: PCT/KR2024/096214
(87) International publication number: WO 2025/084888

(57) **Abstract**

In embodiments, provided is a method performed by a first distributed unit (DU) providing a primary cell (PCell). The method may comprise the operations of: receiving, from a second DU providing a secondary cell (SCell), a request message for downlink data through a communication interface between the first DU and the second DU; and transmitting, as a response to the request message, a response message to the second DU through the communication interface. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

## Description

### [Technical Field]

The present disclosure relates to a wireless communication system, and more specifically, relates to an electronic device and a method for communication between distributed units in a wireless communication system.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), nonorthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In the 6G communication system, a function of a RAN is expected to be further subdivided into a type of a service subscriber and a service provider. In a service-based network, a subscription service acknowledgment procedure for a service subscription status will be applied to various functions.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, a method performed by a first distributed unit (DU) providing a primary cell (PCell) is provided. The method may comprise receiving, from a second DU providing a secondary cell (SCell) through a communication interface between the first DU and the second DU, a request message for downlink data. The method may comprise transmitting, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, a method performed by a second distributed unit (DU) providing a secondary cell (SCell) and connected to a first distributed unit (DU) providing a primary cell (PCell) is provided. The method may comprise transmitting, to the first DU through a communication interface between the first DU and the second DU, a request message for downlink data. The method may comprise receiving, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, an electronic device of a first distributed unit (DU) providing a primary cell (PCell) is provided. The electronic device may comprise at least one processor comprising processing circuitry. The electronic device may comprise memory, comprising one or more storage mediums, storing instructions. The instructions, when executed by the at least one processor individual or collectively, may cause the first DU to receive, from a second DU providing a secondary cell (SCell) through a communication interface between the first DU and the second DU, a request message for downlink data, and transmit, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, an electronic device of a second distributed unit (DU) providing a secondary cell (SCell) and connected to a first distributed unit (DU) providing a primary cell (PCell) is provided. The electronic device may comprise at least one processor comprising processing circuitry. The electronic device may store instructions and may comprise one or more storage mediums. It may comprise memory. The instructions, when executed by the at least one processor individual or collectively, may cause the second DU to transmit to the first DU through a communication interface between the first DU and the second DU, a request message for downlink data, and receive, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, an electronic device of a first distributed unit (DU) providing a primary cell (PCell) is provided. The electronic device may comprise at least one processor comprising processing circuitry. The at least one processor may be configured such that the first DU receives, from a second DU providing a secondary cell (SCell) through a communication interface between the first DU and the second DU, a request message for downlink data, and transmits, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, an electronic device of a second distributed unit (DU) providing a secondary cell (SCell) and connected to a first distributed unit (DU) providing a primary cell (PCell) is provided. The electronic device may comprise at least one processor comprising processing circuitry. The at least one processor may be configured such that the second DU transmits to the first DU through a communication interface between the first DU and the second DU, a request message for downlink data, and receives, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, a non-transitory computer-readable storage medium is provided. The non-transitory computer-readable storage medium may comprise one or more storage mediums storing instructions. The instructions, when executed by at least one processor individually or collectively, may be configured such that a first distributed unit (DU) providing a primary cell (PCell) receives, from a second DU providing a secondary cell (SCell), through a communication interface between the first DU and the second DU, a request message for downlink data, and transmits, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, a non-transitory computer-readable storage medium is provided. The non-transitory computer-readable storage medium may comprise one or more storage mediums storing instructions. The instructions, when executed by at least one processor individually or collectively, may cause, a second distributed unit (DU) providing a secondary cell (SCell) and connected to a first distributed unit (DU) providing a primary cell (PCell), to transmit, to the first DU through a communication interface between the first DU and the second DU, a request message for downlink data, and receive, from the first DU through the communication interface, a response message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

### [Description of the Drawings]

The above and other aspects, features, and advantages of certain embodiments of the present disclosure will be more apparent from the following description taken in conjunction with the accompanying drawings.
FIGS. 1A to 1B illustrate examples of a wireless communication system.
FIGS. 2A to 2C illustrate examples of a spectrum aggregation environment.
FIG. 3 illustrates an example of a resource structure in a time region and a frequency region.
FIG. 4A illustrates a protocol stack in a control plane.
FIG. 4B illustrates a protocol stack in a user plane.
FIG. 4C illustrates an example of channels in a communication standard.
FIG. 5 illustrates an example of spectrum aggregation between distributed units (DUs).
FIGS. 6A and 6B illustrate examples of a control plane for spectrum aggregation between DUs.
FIGS. 7A and 7B illustrate examples of a secondary cell (SCell) status update procedure.
FIGS. 8A and 8B illustrate examples of a procedure of downlink data delivery.
FIGS. 9A and 9B illustrate examples of a physical uplink control channel (PUCCH) resource allocation procedure.
FIGS. 10A and 10B illustrate examples of a physical downlink shared channel (PDSCH) allocation procedure.
FIGS. 11A and 11B illustrate examples of an uplink control information (UCI) exchange procedure.
FIG. 12 illustrates an example of a signal flow between DUs for carrier aggregation (CA) between DUs.
FIG. 13 illustrates an example of a signal flow between DUs for CA between DUs.
FIG. 14 illustrates an example of a signal flow between DUs for CA between DUs.
FIG. 15 illustrates an example of a signal flow between DUs for CA between DUs.
FIG. 16 illustrates an example of components of an electronic device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a data type (e.g., a list, a set, or a subset), a term for a computation state (e.g., a step, an operation, or a procedure), a term referring to data (e.g., a packet, a user stream, information, a bit, a symbol, or a codeword), a term referring to a resource (e.g., a symbol, a slot, a subframe, a radio frame, a subcarrier, a resource element (RE), a resource block (RB), a bandwidth part (BWP), or an occasion), a term referring to a channel, a term referring to network entities, a term referring to a component of a device, and the like used in the following descriptions are exemplified for convenience of description. Therefore, the present disclosure is not limited to terms described below, and another term having an equivalent technical meaning may be used.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for an operation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, unless explicitly stated otherwise, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), extensible radio access network (xRAN), and open-radio access network (O-RAN)), but this is only an example for description. Various embodiments of the present disclosure may be easily modified and applied in another communication system.

In the present disclosure, a signal quality may be, for example, at least one of reference signal received power (RSRP), beam reference signal received power (BRSRP), reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case that a signal quality value associated with a signal size is large or a signal quality value associated with an error rate is small. When the signal quality is high, it may mean that a smooth wireless communication environment is guaranteed. In addition, an optimal beam may mean a beam having the highest signal quality among beams.

Currently, discussions are underway on improving and enhancing an initial 5G mobile communication technology in consideration of services that a 5G mobile communication technology was intended to support and physical layer standardization for a technology such as Vehicle-to-Everything (V2X) to assist driving decision of an autonomous vehicles based on their location and status information transmitted by the vehicle and enhance user convenience, New Radio Unlicensed (NR-U) for a purpose of operating a system that meet various regulatory requirements in an unlicensed band, NR terminal low power consumption technology (UE Power Saving), Non-Terrestrial Network (NTN), which a terminal-satellite direct communication for securing coverage in areas where communication with terrestrial networks is impossible, positioning, and the like, is in progress.

Additionally, standardization of wireless interface architecture/protocol for a technology such as Industrial Internet of Things (IIoT) to support a new service through linkage and convergence with another industry, Integrated Access and Backhaul (IAB) to provide a node for expanding a network service area by integrating and supporting a wireless backhaul link and an access link, Mobility Enhancement including Conditional Handover and Dual Active Protocol Stack (DAPS) handover, 2-step RACH for NR to simplify a random access procedure, and the like is in progress, and standardization of a system architecture/service field for 5G baseline architecture (e.g., Service based Architecture, and Service based Interface) for grafting Network Functions Virtualization (NFV) and Software-Defined Networking (SDN) technologies and Mobile Edge Computing (MEC) that receives a service based on a location of a terminal is also in progress.

If such a 5G mobile communication system is commercialized, connected devices in an explosive increasing trend will be connected to a communication network, and accordingly, it is expected that a function and performance of the 5G mobile communication system will be strengthened and an integrated operation of the connected devices will be required. To this end, eXtended Reality (XR) to efficiently support Augmented Reality (AR), Virtual Reality (VR), and Mixed Reality (MR), improving 5G performance and reducing complexity using Artificial Intelligence (AI) and Machine Learning (ML), AI service support, metaverse service support, drone communication and the like.

In addition, this development of the 5G mobile communication system should be based on development of a multi-antenna transmission technology such as a new waveform, Full Dimensional MIMO (FD-MIMO), an Array Antenna, and a Large Scale Antenna, a metamaterial-based lens and antenna to improve coverage of a terahertz band signal, a high-dimensional spatial multiplexing technology using Orbital Angular Momentum (OAM), and a Reconfigurable Intelligent Surface (RIS) technology to ensure coverage in a terahertz band of a 6G mobile communication technology, as well as a Full Duplex technology, an AI-based communication technology that utilizes a satellite and an artificial intelligence from a design stage and internalizes an end-to-end AI support function to realize system optimization, and next-generation distributed computing technology that realize a service with complexity beyond a limit of a terminal computing capability by utilizing ultra-high performance communication and a computing resource, to enhance frequency efficiency and improve a system network of the 6G mobile communication technology, and the like.

Hereinafter, an example of 4G and/or 5G environments has been described, but this description does not limit a scope of a communication environment of embodiments of the present disclosure. A technical principle according to embodiments of the present disclosure may also be applied to 6G and post-6G communication technologies and network environments.

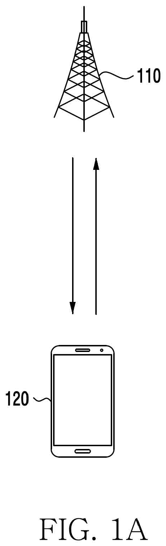

FIGS. 1A to 1B illustrate examples of a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

The terminal 120 may be configured with carrier aggregation (CA) for cells of the base station 110. A CA technology is a technology for increasing frequency usage efficiency of the terminal 120 and the base station 110 by connecting the terminal to a homogeneous wireless communication cell group having a common radio resource control entity and simultaneously using frequency resources on a component carrier (CC) of each cell located in different frequency bands for signal transmission and reception. Cells configured for the CA may include one primary cell (PCell) and one or more secondary cells (SCells).

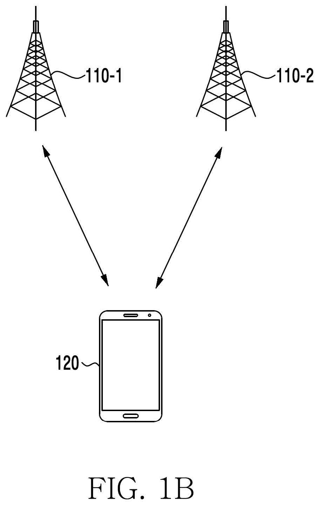

Referring to FIG. 1B, the terminal 120 may be configured in dual connectivity (DC) using a first base station 110-1 and a second base station 110-2. A DC technology is a technology for increasing frequency usage efficiency by connecting the terminal simultaneously to two independent heterogeneous or homogeneous wireless communication cell groups having separate radio resource control entities and using frequency resources on a component carrier of a cell in each cell group located in different frequency bands for signal transmission and reception. The terminal 120 may be connected to two different radio resource entities (e.g., the first base station 110-1 and the second base station 110-2), and may use radio resources allocated by each radio resource entity. In MR-DC, a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 110-1 or the second base station 110-2). Herein, one node is a master node (MN) and another node is a secondary node (SN). The MN and the SN may be connected through a network interface, and the MN may be connected to a core network. The SN may be connected or may not be connected to the core network.

The MN may provide a master cell group (MCG). The MN may be referred to as an M-NODE or an M-NG-RAN node in addition to the MN. The MCG may include one or more cells. The MCG may include a primary cell (PCell). The MCG may include a plurality of aggregated cells. The MCG may include the PCell and one or more secondary cells (SCells). The SN may provide a secondary cell group (SCG). The SN may be referred to as an S-NODE or an S-NG-RAN node in addition to the SN. The SCG may include one or more cells. The SCG may include a plurality of aggregated cells. Like the MCG, the SCG may include a PCell and/or an SCell. A cell functioning as a PCell within the SCG may be referred to as a primary secondary cell (PSCell). A secondary cell group may include the PSCell and one or more SCells. Hereinafter, a special cell (SpCell) may be used as a term including the PCell and the PSCell. The SpCell means a primary cell of the MCG or the SCG. In other words, the SpCell of the MCG refers to the PCell, and the SpCell of the SCG refers to the SCell.

Possible types of DC may be defined as follows.
1) EN-DC: Dual connectivity in which an eNB is connected to an evolved packet core (EPC), and the terminal is connected to an eNB acting as the MN and a gNB acting as the SN. Herein, the gNB may be referred to as an en-gNB, and the en-gNB may be connected or may not be connected to the EPC.
2) NGEN-DC: Dual connectivity in which an eNB is connected to a 5G core (5GC), and the terminal is connected to an eNB acting as the MN and a gNB acting as the SN. Herein, the eNB may be referred to as an ng-eNB.
3) NE-DC: Dual connectivity in which a gNB is connected to the 5GC, and the terminal is connected to a gNB acting as the MN and an eNB acting as the SN. Herein, the eNB may be referred to as an ng-eNB.
4) NR-DC: Dual connectivity in which gNBs are connected to the 5GC, and the terminal is connected to a gNB acting as the MN and a gNB acting as the SN. NR-DC may be used even in a case that the UE performs roles of both the MN and the SN and configures both the MCG and the SCG by being connected to a single gNB.

The terminal 120 may support multi-radio (MR)-DC. The terminal 120 may be connected to the first base station 110-1 and the second base station 110-2. The first base station 110-1 is the MN and the second base station 110-2 is the SN, and may be connected to the terminal. Together with carrier aggregation (CA) provided by each base station, the DC technology may provide a higher data rate. The first base station 110-1 and the second base station 110-2, as the MN and the SN, respectively, may transmit downlink traffic to the terminal 120 or receive uplink traffic from the terminal 120.

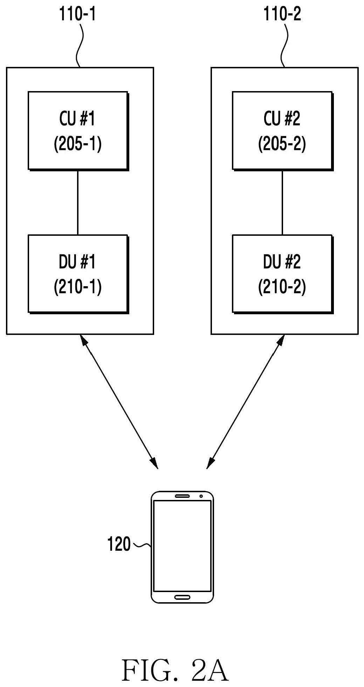

FIGS. 2A to 2C illustrate examples of a spectrum aggregation environment. Spectrum aggregation refers to a wireless communication technology using a frequency interval and another frequency interval different from the frequency interval together in a frequency domain. The frequency intervals may correspond to at least one of a resource block (RB), a bandwidth part (BWP), a bandwidth, a cell, a cell group, a frequency band, and/or a frequency range, according to a used technology. For example, spectrum aggregation may include CA. A bandwidth of a primary cell (PCell) and a bandwidth of a secondary cell (SCell) may be used together for data communication. For example, spectrum aggregation may include DC. A frequency domain occupied by a cell of an MCG of an MN and a frequency domain occupied by a cell of an SCG of an SN may be used together for communication. For example, spectrum aggregation may include a CoMP. Base stations having different frequency spectrums may be used for data communication. For example, spectrum aggregation may include multi (M)-transmission reception point (TRP). Resources allocated for different frequency domains may be used for data transmission.

A cell may indicate an area (or coverage) coverable by one base station (e.g., gNB) (or one distributed unit (DU) (or a digital unit (DU))). A cell may indicate not only a geographical area but also an area occupying a specific spectrum in a frequency domain. A DU may cover one cell or may cover multiple cells. Herein, the multiple cells may be distinguished by a supporting frequency and an area of a covering sector. A serving cell, which is a cell providing a terminal and upper layer signaling (e.g., radio resource control (RRC) signaling), may indicate one cell or multiple cells. In a case that a terminal 120 is not configured to support carrier aggregation (CA) and dual connectivity (DC), the serving cell may be one cell corresponding to a primary cell (PCell). In a case that the terminal 120 is configured to support CA or DC, the serving cell may be a set of cells including a PCell and one or more SCells.

In the present disclosure, a base station (e.g., a base station 110, a first base station 110-1, or a second base station 110-2) may be implemented as a distributed deployment according to a central unit (CU) (or a control unit (CU)) configured to perform a function of upper layers of an access network and a distributed unit (DU) configured to perform a function of lower layers. The CU and the DU may indicate an independent network entity for the access network (or which may be referred to as a network node, a network equipment, or a network device). The CU may be connected to one or more DUs, and may be responsible for a function of upper layers (e.g., a packet data convergence protocol (PDCP) protocol and a radio resource control (RRC) protocol) than the DU. The DU may be responsible for a function of lower layers (e.g., a radio link control (RLC) layer, a medium access control (MAC) layer, and a physical (PHY) layer). Hereinafter, operations of the CU and the DU are described unless separately defined, but an implementation scheme according to embodiments of the present disclosure is not limited thereto. As a non-limiting example, the DU may be connected to a radio unit (RU), the DU may perform some functions (high PHY) of an RLC layer, a MAC layer, and a physical (PHY) layer, and the RU may be responsible for remaining functions (low PHY) of the PHY layer.

Referring to FIG. 2A, a base station (e.g., the base station 110, the first base station 110-1, or the second base station 110-2) may be separated into a CU and a DU. The CU and the DU may be connected through an F1 interface. The DU may support one or more cells, and a cell may be supported only by one DU. The first base station 110-1 may include a CU #1 205-1 and a DU #1 210-1. The DU #1 210-1 may provide one or more cells. The second base station 110-2 may include a CU #2 205-2 and a DU #2 210-2. The DU #2 210-2 may provide one or more cells. For example, for a DC operation, an MgNB-DU may indicate a gNB-DU (e.g., the DU #1 210-1) of an en-gNB or a gNB serving as a master node, and an SgNB-DU may indicate a gNB-DU (e.g., the DU #2 210-2) of an en-gNB or a gNB serving as a secondary node. In terms of the terminal 120, the CU #1 205-1 and a DU #1 231 may operate as a logical node (e.g., a gNB) corresponding to a base station, and the CU #2 205-2 and a DU #2 232 may operate as a logical node (e.g., a gNB) corresponding to another base station. According to an embodiment, the terminal 120 may access a network through a cell provided by the DU #1 231 and a cell provided by the DU #2 232.

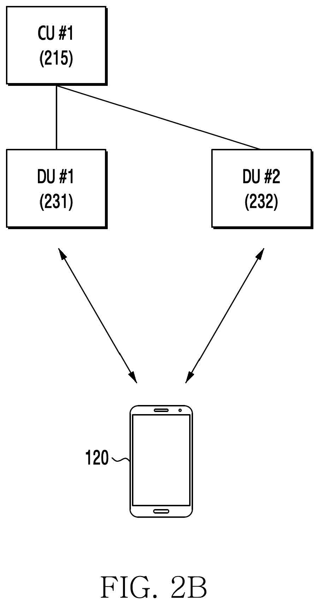

Referring to FIG. 2B, a base station (e.g., the base station 110, the first base station 110-1, or the second base station 110-2) may be separated into a CU and a DU. Unlike a case that a plurality of independent base stations (e.g., the first base station 110-1 and the second base station 110-2) service the terminal 120, one CU and multiple DUs may service the terminal 120. For example, a CU #1 215 may be connected to a DU #1 231 and a DU #2 232. The CU #1 215 may be connected to each of the DU #1 231 and the DU #2 232 through an F1 interface. The DU #1 231 may provide one or more cells. The DU #2 232 may provide one or more cells. For example, for a CA operation, the DU #1 231 may provide a cell corresponding to a PCell. The DU #2 232 may provide a cell corresponding to an SCell. In terms of the terminal 120, the CU #1 215 and the DU #1 231 may operate as a logical node (e.g., a gNB) corresponding to a base station, and the CU #1 215 and the DU #2 232 may operate as a logical node (e.g., gNB) corresponding to another base station. According to an embodiment, the terminal 120 may access a network through carrier aggregation (CA) using a cell (e.g., the PCell) provided by the DU #1 231 and a cell (e.g., the SCell) provided by the DU #2 232. Two cells for CA may be configured for the terminal 120.

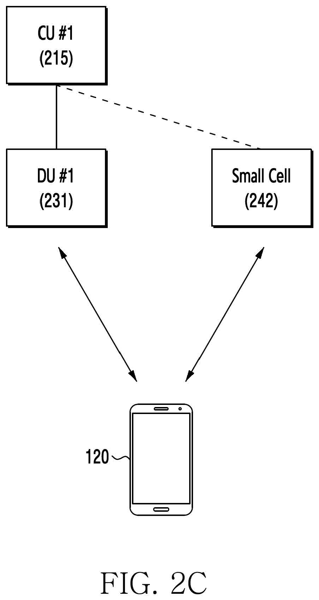

Referring to FIG. 2C, a base station may be separated into a CU and a DU. In addition to a distributed deployment separated into the CU and the DU, a node 242 for a small cell may be additionally disposed. For example, a CU #1 215 may be connected to a DU #1 231 through an F1 interface. The node 242, which is an independent entity, may perform communication with the CU #1 215. The DU #1 231 may provide one or more cells. The node 242 may provide one or more small cells. For example, for a CA operation, the DU #1 231 may provide a cell corresponding to a PCell. The node 242 may provide a cell corresponding to an SCell. In terms of the terminal 120, the CU #1 215 and the DU #1 231 may operate as a logical node (e.g., a gNB) corresponding to a base station, and the CU #1 215 and the node 242 may operate as a logical node (e.g., a gNB) corresponding to another base station. According to an embodiment, the terminal 120 may access a network through CA using a cell (e.g., the PCell) provided by the DU #1 231 and a cell (e.g., the SCell) provided by the DU #2 232. Two cells for CA may be configured for the terminal 120.

Vendors of DUs (or a DU and a node providing a small cell) may be different from each other. Frequency intervals used between multi-vendors may not satisfy compatibility with each other. For example, a vendor of a first DU and a vendor of a second DU may have different purchased frequency bands from each other. A frequency domain occupied by a cell provided in the first DU may be different from a frequency domain occupied by a cell provided in the second DU. Since the second DU may not accurately know information on the cell of the first DU, it may be difficult to configure CA between two cells. If CA of the two cells is configured, since there is no interface between the first DU and the second DU, signaling through a CU or a higher entity may be required. However, since an increase in signaling causes a delay, effective resource management may be difficult.

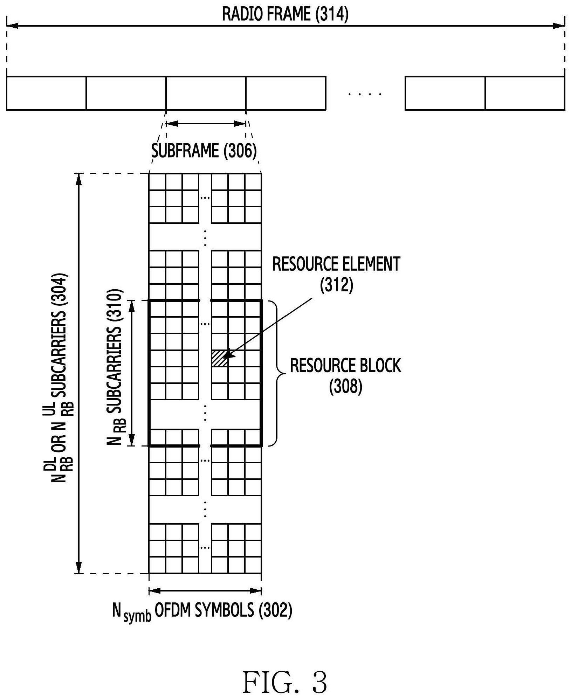

Hereinafter, in embodiments of the present disclosure, an interface between DUs (e.g., which may be referred to as an X1 interface), and procedures and messages for configuring the interface are described for spectrum aggregation, such as the above-described CA or DC. First, resources in a physical layer are described through FIG. 3.

FIG. 3 illustrates an example of a resource structure in a time domain and a frequency domain. FIG. 3 exemplifies a basic structure of a time-frequency domain, which is a radio resource region in which data or a control channel is transmitted in a downlink or an uplink.

Referring to FIG. 3, a horizontal axis indicates a time domain, and a vertical axis indicates a frequency domain. A minimum transmission unit in the time domain is an orthogonal frequency division multiplexing (OFDM) symbol, and N_{symb} OFDM symbols 302 are gathered to configure a slot 306. A length of a subframe is defined as 1.0 ms, and a length of a radio frame 314 is defined as 10 ms. A minimum transmission unit in the frequency domain is a subcarrier, and a carrier bandwidth configuring a resource grid is configured with N_{BW} subcarriers 304.

A basic unit of a resource in the time-frequency domain is a resource element (hereinafter, 'RE') 312, may be indicated by an OFDM symbol index and a subcarrier index. A resource block may include a plurality of resource elements. In an LTE system, a resource block (RB) (or a physical resource block (hereinafter, 'PRB')) is defined as N_{symb} consecutive OFDM symbols in the time domain and N_{SC}^{RB} consecutive subcarriers in the frequency domain. In an NR system, an RB 308 may be defined as N_{SC}^{RB} consecutive subcarriers 310 in the frequency domain. One RB 308 includes N_{SC}^{RB} REs 312 in a frequency axis. In general, a minimum transmission unit of data is an RB, and the number of subcarriers is N_{SC}^{RB}=12. The frequency domain may include common resource blocks (CRBs). A physical resource block (PRB) may be defined in a bandwidth part (BWP) on the frequency domain. CRB and PRB numbers may be determined according to subcarrier spacing. A data rate may increase in proportion to the number of RBs scheduled for a terminal.

In an NR system, in a case of a frequency division duplex (FDD) system operating by dividing a downlink and an uplink by a frequency, a downlink transmission bandwidth and an uplink transmission bandwidth may be different from each other. A channel bandwidth indicates a radio frequency (RF) bandwidth corresponding to a system transmission bandwidth. [Table 1] indicates a portion of a correspondence relationship between a system transmission bandwidth, subcarrier spacing (SCS), and a channel bandwidth defined in an NR system in a frequency band lower than x GHz (e.g., frequency range (FR) 1 (310 MHz to 7125 MHz)). In addition, [Table 2] indicates a portion of a correspondence relationship between a transmission bandwidth, subcarrier spacing, and a channel bandwidth defined in an NR system in a frequency band higher than yGHz (e.g., FR2 (24250 MHz to 52600 MHz) or FR2-2 (52600 MHz to 71000 MHz)). For example, an NR system having a 100 MHz channel bandwidth with 30 kHz subcarrier spacing is configured with a transmission bandwidth of 273 RBs. In [Table 1] and [Table 2], N/A may be a bandwidthsubcarrier combination not supported in the NR system.

**[Table 1]**

| Channel bandwidth [MHz] | SCS | 5 | 10 | 20 | 50 | 80 | 100 |
|---|---|---|---|---|---|---|---|
| Transmission bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel bandwidth [MHz] | SCS | 50 | 100 | 200 | 400 |
|---|---|---|---|---|---|
| Transmission bandwidth configuration N_{RB} | 60kHz | 66 | 132 | 264 | N/A |
| | 120kHz | 32 | 66 | 132 | 264 |

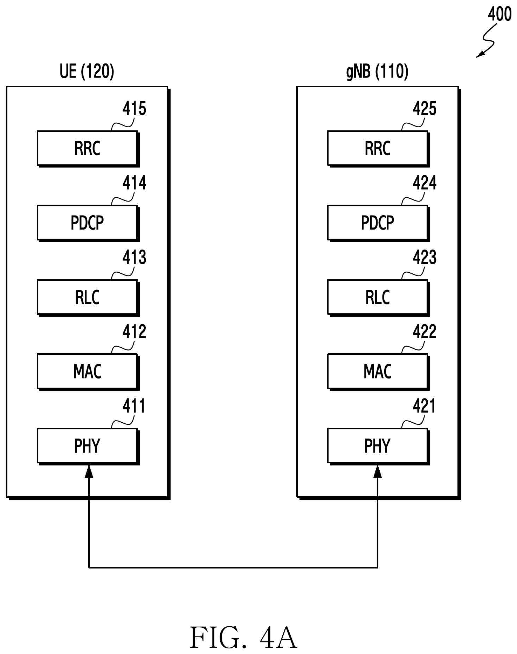

FIG. 4A illustrates a protocol stack 400 in a control plane.

Referring to FIG. 4A, in an NR communication system, a wireless protocol of a control plane of a terminal 120 (e.g., a UE) may include PHY 411, MAC 412, RLC 413, a PDCP 414, and RRC 415. In the NR communication system, a wireless protocol of a control plane of a base station 110 (e.g., a gNB) may include PHY 421, MAC 422, RLC 423, a PDCP 424, and RRC 425.

Main functions of the RRC 415 and 425 may include a portion of the following functions.
- System information broadcast related to access stratum (AS) and non access stratum (NAS)
- Paging initiated by a 5GC or an NG-RAN
- RRC connection establishment, maintenance, and release between a UE and an NG-RAN, including the following:
   1) addition, modification, and release of carrier aggregation
   2) addition, modification, and release of dual connectivity in an NR or between E-UTRA and an NR.
- Security functions including key management
- Establishment, configuration, maintenance, and release of a Signaling Radio Bearer (SRB) and a Data Radio Bearer (DRB)
- Mobility functions including the following:
   1) Handover and context transfer
   2) UE cell selection and reselection and control of cell selection and reselection
   3) Inter-RAT mobility
- Quality of service (QoS) management functions
- UE measurement reporting and reporting control;
- Detection of and recovery from radio link failure
- Transmission of an NAS message to/from a NAS from/to a UE.

Main functions of the PDCPs 414 and 424 may include a portion of the following functions.
- Header compression and decompression function: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above-described content, a reordering function of a PDCP layer may indicate a function of reordering PDCP PDUs received from a lower layer in order based on a PDCP sequence number (SN). The reordering function of the PDCP layer may include a function of delivering data to an upper layer in an reordered order, may include a function of immediately delivering the data without considering an order, may include a function of recording lost PDCP PDUs by reordering the order, may include a function of delivering a status report for the lost PDCP PDUs to a transmission side, and may include a function of requesting retransmission for the lost PDCP PDUs.

Main functions of the RLC 413 and 423 may include a portion of the following functions.
- Transfer of upper layer PDUs
- In-sequence delivery of upper layer PDUs
- Out-of-sequence delivery of upper layer PDUs
- Error correction through ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above-described content, an in-sequence delivery function of an RLC layer may indicate a function of delivering RLC SDUs received from a lower layer to an upper layer in order. In a case that one original RLC SDU is divided into a plurality of RLC SDUs and received, the in-sequence delivery function of the RLC layer may include a function of reassembling and delivering them.

The in-sequence delivery function of the RLC layer may include a function of reordering received RLC PDUs based on an RLC sequence number (SN) or a PDCP sequence number (SN), may include a function of recording lost RLC PDUs by reordering the order, may include a function of delivering a status report for the lost RLC PDUs to a transmission side, and may include a function of requesting retransmission for the lost RLC PDUs.

The in-sequence delivery function of the RLC layer may include a function of delivering only RLC SDUs up to before the lost RLC SDU to an upper layer in order even in a case that there is a lost RLC SDU. In addition, the in-sequence delivery function of the RLC layer may include a function of delivering, to the upper layer, all RLC SDUs received before a timer started in order if the predetermined timer has expired even in a case that there is a lost RLC SDU. In addition, the in-sequence delivery function of the RLC layer may include a function of delivering, to the upper layer, all RLC SDUs received up to the present in order if the predetermined timer has expired even in a case that there is a lost RLC SDU.

The RLC layer may process RLC PDUs in a received order and deliver them to PDCP 405 and 440 devices regardless of an order of sequence numbers (out-of-sequence delivery).

In a case that the RLC layer receives a segment, the RLC layer may receive segments stored in a buffer or to be received later, reconstruct them as one complete RLC PDU, and then deliver them to the PDCP device.

The RLC layer may not include a concatenation function, and may perform a function in a MAC layer or may replace it with a multiplexing function of the MAC layer.

In the above-described content, an out-of-sequence delivery function of the RLC layer may mean a function of immediately delivering RLC SDUs received from a lower layer to an upper layer regardless of an order. In a case that one original RLC SDU is divided into a plurality of RLC SDUs and received, the out-of-sequence delivery function of the RLC layer may include a function of reassembling and delivering them. The out-of-sequence delivery function of the RLC layer may include a function of storing an RLC SN or a PDCP SN of received RLC PDUs, reordering an order, and recording lost RLC PDUs.

The MAC 412 and 422 may be connected to multiple RLC layers configured in a terminal, and main functions of the MAC may include a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The PHY 411 and 421 may perform an operation of channel coding and modulating upper layer data and transmitting them through a radio channel by generating them as an OFDM symbol, or demodulating and channel decoding the OFDM symbol received through the radio channel and delivering them to an upper layer.

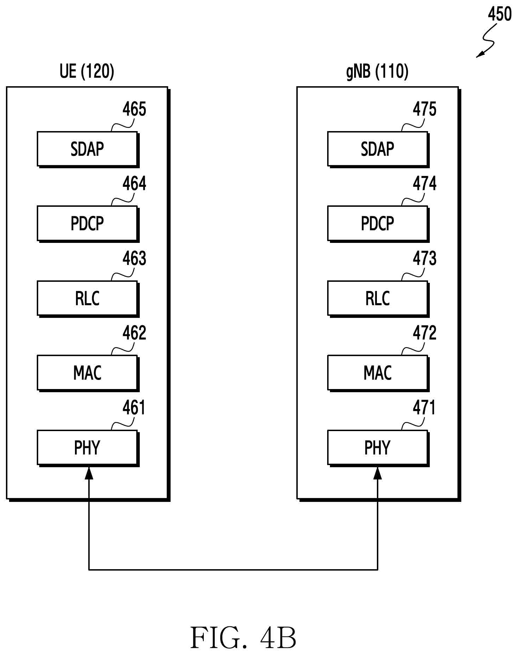

FIG. 4B illustrates a protocol stack 450 in a user plane according to embodiments of the present disclosure.

Referring to FIG. 4B, a wireless protocol of a user plane of a terminal 120 (e.g., a UE) may include PHY 461, MAC 462, RLC 463, a PDCP 464, and an SDAP 465. In an NR communication system, a wireless protocol of a user plane of a base station 110 (e.g., a gNB) may include PHY 471, MAC 472, RLC 473, a PDCP 474, and an SDAP 475.

Main functions of the SDAPs 465 and 475 may include a portion of the following functions.
- Transfer of user plane data
- Mapping between a QoS flow and a DRB for both DL and UL
- Marking QoS flow ID in both DL and UL packets
- Reflective QoS flow to DRB mapping for the UL SDAP PDUs.

For an SDAP layer, the terminal 120 may be configured with whether to use a header of the SDAP layer or whether to use a function of the SDAP layer for each PDCP layer, for each bearer, or for each logical channel, as a Radio Resource Control (RRC) message. In a case that the SDAP header is configured, the terminal 120 may instruct, by a 1-bit indicator for Non-Access Stratum (NAS) Quality of Service (QoS) reflective configuration (NAS reflective QoS) and a 1-bit indicator for Access Stratum (AS) QoS reflective configuration (AS reflective QoS) of the SDAP header, that the terminal 120 updates or reconfigures mapping information on a QoS flow and a data bearer of an uplink and a downlink. The SDAP header may include QoS flow ID information indicating QoS. The QoS information may be used as data processing priority, scheduling information, and the like for supporting a smooth service.

For the PDCPs 464 and 474 in the user plane, the description for the PDCPs 414 and 424 in the control plane may be referred to. For the RLC 463 and 473 in the user plane, the description for the RLC 413 and 423 in the control plane may be referred to. For the MAC 462 and 472 in the user plane, the description for the MAC 412 and 422 in the control plane may be referred to. For the PHY 461 and 471 in the user plane, the description for the PHY 411 and 421 in the control plane may be referred to.

Although the wireless protocol of the NR communication system in a radio access network has been described as an example, embodiments of the present disclosure are not limited thereto. For example, also in an LTE communication system, a DU (e.g., an eNB-DU) may be defined, and in this case, the SDAPs 465 and 475 may be omitted. Embodiments of the present disclosure provide procedures of an interface between DUs or an interface between a DU and a base station (e.g., an eNB/gNB), for spectrum aggregation applicable in a 4G, 5G, and/or 6G system, and thus, in addition to the communication protocol of FIG. 4B, various types of layers or protocols may be used.

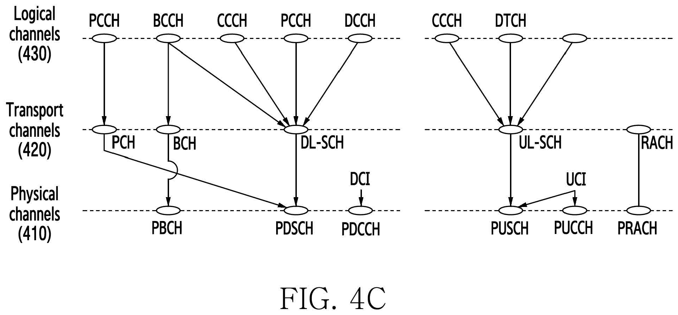

FIG. 4C illustrates an example of channels in a communication standard.

Referring to FIG. 4C, the channels may include a physical channel 410, a transport channel 420, and a logical channel 430 according to layers defined in the communication standard. The physical channel 410 may provide functions (e.g., channel coding, HARQ processing, modulation, multiple antenna processing, and resource mapping) required to generate physical signals in a physical layer. In the physical layer, the physical signals are modulated in an OFDM scheme, and may be transmitted in a radio environment through a time-frequency resource (e.g., the resource of the resource grid of FIG. 3).

In downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may indicate symbols transmitted through the PDSCH, and a downlink control signal may mean symbols transmitted through the PDCCH. In addition, in a downlink, in addition to the channels illustrated in FIG. 4C, an SS/PBCH block including synchronization signals (e.g., a primary synchronization signal (PSS) and a secondary synchronization signal (SSS)) and broadcast signals (e.g., a PBCH) may be transmitted for synchronization. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted in the downlink.

In uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may indicate symbols transmitted through the PUSCH, and an uplink control signal may mean symbols corresponding to the UCI. For example, the UCI may include at least one of a scheduling request (SR), hybrid automatic request-acknowledge (HARQ-ACK) bit(s), or channel state information (CSI). In addition, in the uplink, in addition to the channels illustrated in FIG. 4C, for channel estimation, the DMRS and the PTRS for channel estimation and demodulation may be transmitted in the downlink.

The transport channel 420 may connect a physical layer and a medium access channel (MAC) layer located at an upper level of the physical layer, and may be distinguished according to how data is transmitted through a radio interface. In the downlink, the transport channel 420 may include at least one of a paging channel (PCH) for paging, a broadcast channel (BCH) for broadcasting system information, or a downlink shared channel (DL-SCH) for transmission of downlink data. In the uplink, the transport channel 420 may include at least one of a random access channel (RACH) for transmission of a random access preamble or an uplink shared channel (UL-SCH) for transmission of downlink data.

The logical channel 430 is located above the transport channel and is mapped to the transport channel 420. The logical channel 430 may be divided into a control channel for transmission of control region information and a traffic channel for transmission of user region information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, 'data' may mean sequences other than a reference signal. As an example, 'data' obtained by a receiver in uplink communication may mean signals delivered through the PUSCH. However, the PUSCH is exemplary, and of course, embodiments of the present disclosure may also be applied to other channels (e.g., a PDSCH, a PBCH, a PDCCH, and a PUCCH) requiring channel estimation.

As communication technology develops, the number of network entities increases, and communication with an external node (e.g., a base station or another DU) through a CU causes a delay, and thus, an interface between DUs or an interface between a DU and a base station needs to be defined. Hereinafter, for spectrum aggregation, such as the above-described CA, procedures and messages for configuring a new interface and the interface are proposed. Hereinafter, procedures and messages related to the interface between DUs are described, but of course, the corresponding descriptions may also be applied in the same or similar manner to an interface between a DU and an independent base station (e.g., a base station of a small cell). In the present disclosure, in describing the interface between DUs, the DUs may be the same vendor, or may be different vendors. That is, exchange of information may be performed through an interface and messages to be described later even between DUs of different vendors.

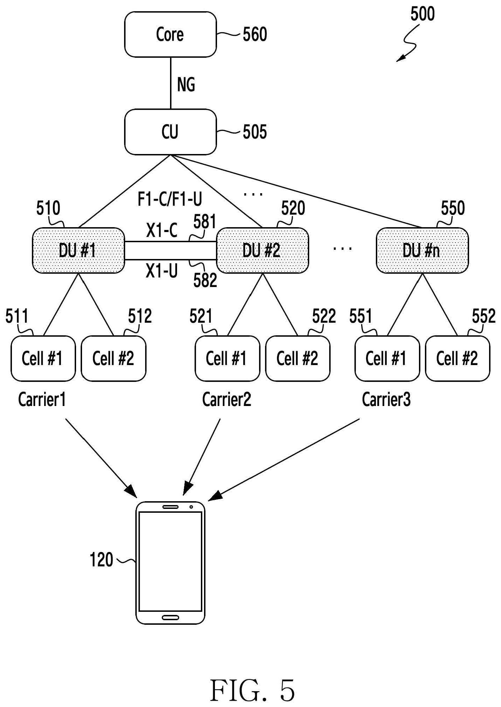

FIG. 5 illustrates an example of spectrum aggregation between distributed units (DUs).

Referring to FIG. 5, a communication network may include a radio access network 500 and a core network 560. A node (e.g., a base station 110) providing the radio access network 500 may provide a communication service to a user equipment (e.g., a terminal 120) through one or more cells. The core network 560 may include various entities so that the communication service may be smoothly performed. For example, the core network 560 may include an entity responsible for an access management function (AMF). For example, the core network 560 may include an entity responsible for a user plane function (UPF). The core network 560 may be implemented through an NG interface with the radio access network 500. The NG interface may include an NG-C interface for a control plane and an NG-U interface for a user plane. The NG-C interface may be defined between the node providing the radio access network 500 and the AMF. The NG-U interface may be defined between the node providing the radio access network 500 and the UPF.

The node providing the radio access network 500 may be implemented as a distributed deployment according to a central unit (CU) (or a control unit (CU)) 505 configured to perform functions of upper layers (e.g., a PDCP and RRC) of an access network and a distributed unit (DU) configured to perform functions of lower layers (e.g., RLC, MAC, and PHY). An interface between the CU 505 and the DU may be referred to as an F1 interface. The F1 interface may include an F1-C interface for a control plane and an F1-U interface for a user plane. The CU 505 may be connected to one or more DUs. For example, the CU 505 may be connected to a DU #1 510, a DU #2 520, ..., and a DU #n 550. Each DU may provide one or more cells. For example, the DU #1 510 may provide a cell #1 511 and a cell #2 512. The DU #2 520 may provide a cell #1 521 and a cell #2 522. The DU #n 550 may provide a cell #1 551 and a cell #2 552.

In Carrier Aggregation (CA), two or more cells may be aggregated. A cell may have a component carrier (CC). The terminal 120 may simultaneously receive or transmit signals through one or a plurality of CCs according to a capability. If CA is configured, the terminal 120 may have only one RRC connection with a network. In RRC connection establishment/re-establishment/handover, one serving cell may provide NAS mobility information, and in RRC connection re-establishment/handover, one serving cell may provide a security input. The serving cell may be referred to as a Primary Cell (PCell). According to a UE capability of the terminal 120, a Secondary Cell (SCell) may be configured to form a serving cell set together with the PCell. The serving cell set configured for the terminal 120 may always be configured by one PCell and one or more SCells. For example, the cell #1 511 of the DU #1 510 and the cell #1 521 of the DU #2 520 may be configured as a serving cell set for the terminal 120. In addition, for example, the cell #1 511 of the DU #1 510, the cell #1 521 of the DU #2 520, and the cell #1 551 of the DU #n 550 may be configured as a serving cell set for the terminal 120. In addition, for example, the cell #2 512 of the DU #1 510 and the cell #1 551 of the DU #n 550 may be configured as a serving cell set for the terminal 120.

Reconfiguration, addition, and removal of an SCell may be performed by the RRC. During handover in an NR and during resumption a connection in RRC_INACTIVE, a network may also add, remove, maintain, or reconfigure an SCell to be used together with a target PCell. When adding a new SCell, dedicated RRC signaling may be used to transmit all required system information of the SCell.

In embodiments of the present disclosure, the CA for the terminal 120 may be configured through a plurality of DUs. An operator may establish DUs across a plurality of sites or DUs for multiple vendors according to a network environment and a holding status of carriers. In order to support inter-DU CA even if not from the same vendor or not in the same site, an interface between DUs may be defined. Hereinafter, the interface between DUs is referred to as an X1 interface, but the interface may be alternatively referred to by another term having the same technical meaning (e.g., D2, M1, F3, MV, or XD). An interface between DUs in a control plane may be referred to as an X1-C interface 581. An interface between DUs in a user plane may be referred to as an X1-U interface 582. The X1-C interface 581 may be used to share call control information between DUs and for a setup procedure. The X1-U interface 582 may be used for inter-DU CA bearer delivery, signaling between MAC layers, and information sharing.

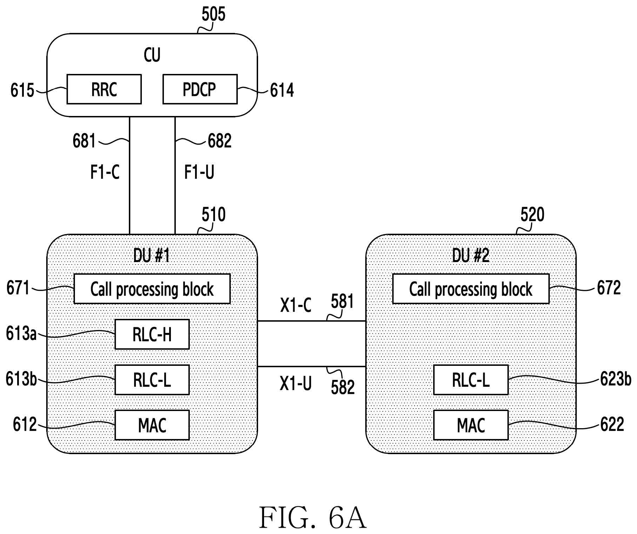

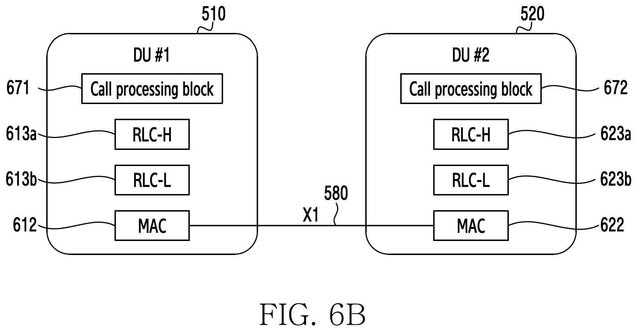

FIGS. 6A and 6B illustrate examples of a control plane for spectrum aggregation between DUs.

Referring to FIG. 6A, a CU 505 may be responsible for functions of RRC 615 and functions of a PDCP 614. The CU 505 may be connected to a DU #1 510 through an F1 interface. The F1 interface may include an F1-C interface 681 for a control plane and an F1-U interface 682 for a user plane.

The DU #1 510 and a DU #2 520 may be connected through an X1 interface. The X1 interface may include an X1-C interface 581 for a control plane and an X1-U interface 582 for a user plane. The DU #1 510 may be a node providing a PCell of CA. The DU #1 510 may include a MAC processing module 612, an RLC-H processing module 613a, an RLC-L processing module 613b, and a call processing block 671. The MAC processing module 612 may be configured to process functions of MAC 422 and MAC 472. The RLC-H processing module 613a and the RLC-L processing module 613b may be configured to process functions of RLC 423 and RLC 473. Functions requiring real time processing (e.g., TTI-based functions) among the functions of the RLC 423 and the RLC 473 may be processed in the RLC-L processing module 613b, and other functions requiring non-real time processing may be processed in the RLC-H processing module 613a. The call processing block 671 may be configured to process parameters received from the CU 505 (e.g., RRC IEs, messages and IEs received through the F1 interface) or parameters provided to the DU #2 520 or received from the DU #2 (e.g., RRC IEs, messages and IEs received through the F1 interface).

The DU #2 520 may be a node providing an SCell of CA. The DU #2 520 may include a MAC processing module 622, an RLC-L processing module 623b, and a call processing block 672. The MAC processing module 622 may be configured to process functions of the MAC 422 and the MAC 472. The RLC-L processing module 623b may be configured to process at least a portion of functions of the RLC 423 and the RLC 473. The call processing block 672 may be configured to process parameters received from the DU #2 520 (e.g., RRC IEs, messages and IEs received through the F1 interface). Although not illustrated in FIG. 6A, according to an embodiment, the DU #2 520 may also have an F1 interface with the CU 505. In this case, the call processing block 672 of the DU #2 520 may be configured to process parameters received from the CU 505 (e.g., RRC IEs).

Referring to FIG. 6B, a DU #1 510 may include a MAC processing module 612, an RLC-H processing module 613a, an RLC-L processing module 613b, and a call processing block 671. The same reference numerals may indicate the same descriptions in FIG. 6A. A DU #2 520 may include a MAC processing module 622, an RLC-H processing module 623a, an RLC-L processing module 623b, and a call processing block 672. The same reference numerals may indicate the same descriptions in FIG. 6B. For example, functions requiring real time processing (e.g., TTI-based functions) among the functions of the RLC 423 and the RLC 473 may be processed in the RLC-L processing module 623b, and other functions requiring non-real time processing may be processed in the RLC-H processing module 623a. The DU #1 510 and the DU #2 520 may be connected through an X1 interface 580. For example, the MAC processing module 612 of the DU #1 510 and/or the MAC processing module 622 of the DU #2 520 may be configured to process messages transmitted through the X1 interface 580. The X1 interface may include an X1-C interface 581 for a control plane and an X1-U interface 582 for a user plane. The DU #1 510 may be a node providing a PCell of CA. The DU #2 520 may be a node providing an SCell of the CA.

In the present disclosure, based on the above-described descriptions, techniques for providing a carrier aggregation (CA) service to a terminal (e.g., the terminal 120) between different DUs (e.g., the DU #1 510 and the DU #2 520) are described. Specifically, in order to provide the CA service, information and messages requiring exchange between DUs (e.g., between MACs of the DUs) are described. For example, the information is as follows.

### User equipment (UE) ID

The UE ID may be used to identify a UE (e.g., the terminal 120) for CA. For exchange of information between MACs between DUs (e.g., the MAC processing module 612 and the MAC processing module 622), the UE ID may be used as a unique factor. Since information between the MACs is mostly information for each UE, a factor capable of identifying a UE (e.g., the terminal 120) between the DUs is required. The present disclosure describes that the factor capable of identifying the corresponding UE is referred to as a UE ID, but the UE ID may be used as at least one of various types of identifiers. For example, the UE ID may be at least one of a radio network temporary identifier (RNTI), a cell (C)-RNTI, a radio access network (RAN) UE ID, a gNB-CU UE F1AP ID, a 5^{th} generation (5G)-globally unique temporary identifier (GUTI), a globally unique AMF identifier (GUAMI), a globally unique MME identifier (GUMMEI), a mobile subscriber identity (MSI), an international mobile subscriber identity (IMSI), a temporary mobile subscriber identity (TMSI), or a combination thereof. In the example, the RAN UE ID may be used to uniquely identify a UE on an E1 interface and an F1 interface in a gNB. In the example, the gNB-CU UE F1AP ID may be used to uniquely identify a UE on an F1 interface of a gNB-CU. For example, the UE ID may also be defined as a gNB ID, a DU ID, a cell ID, a UE index for identifying a UE in the corresponding cell, or a combination of some or all thereof.

### SCell status information

In order for CA to operate in a UE (e.g., the terminal 120), an operation of configuring cells for the CA (e.g., SCell addition/SCell modification/SCell release) in an upper layer (e.g., RRC) and an operation of activating a cell in a MAC layer are required. The SCell may be activated or deactivated through a MAC CE of the MAC layer (e.g., an SCell activation MAC CE or an SCell deactivation MAC CE). Therefore, for the CA between DUs, it is necessary to share whether a status of the SCell is an activation state or a deactivation state. The SCell status information is information indicating whether the SCell for the corresponding UE in the DU is in a normally activated state, a deactivated state, or another state. Through the information, whether to start, continue, or cease the CA for the corresponding UE in a PCell or the SCell may be determined.

### Downlink data delivery information

The downlink data delivery information is information on downlink data transmitted for each cell of different DUs (e.g., the DU #1 510 and the DU #2 520). For example, a DU providing an SCell may request an amount of downlink data from a DU providing a PCell. The DU providing the PCell may transmit the downlink data according to the request. The downlink data may correspond to downlink packets. For example, the downlink data may be a PDCP protocol data unit (PDU). For example, the downlink data may be an RLC PDU. For example, the downlink data may be a MAC PDU.

### PUCCH resource allocation information

A UE (e.g., the terminal 120) may transmit feedback information. For example, the UE may transmit feedback (e.g., HARQ-ACK information) on received downlink data through an uplink channel (e.g., a PUCCH). The feedback may be transmitted on a PUCCH resource, and the PUCCH resource may be configured for the UE. Since scheduling in a DU may vary according to the PUCCH resource, the PUCCH resource allocation information may be shared through an X1 interface between DUs. For example, the PUCCH resource allocation information may be used to determine an interval (e.g., a K1 value of 3GPP NR) between a slot for PDSCH transmission in a DU providing an SCell and a transmission slot of the PUCCH resource. For example, the PUCCH resource allocation information may be used to determine an interval (e.g., a K2 value of 3GPP NR) between a slot in which DCI for PUSCH resource allocation in the DU providing the SCell is transmitted and a transmission slot of the PUCCH resource. Through the PUCCH resource allocation information, a time point at which HARQ-ACK information is received in a corresponding DU (e.g., a DU providing a PCell) may be identified. The DU providing the PCell may provide the PUCCH resource allocation information to the UE through RRC signaling. Therefore, the DU providing the SCell may receive the PUCCH resource allocation information from the DU providing the PCell. For example, the DU providing the SCell may request, from the DU providing the PCell, a PUCCH resource required in the SCell, and the DU providing the PCell may transmit, to the DU providing the SCell, an allocation progress for the PUCCH resource.

### PDSCH resource allocation information

A UE (e.g., the terminal 120) may receive downlink data according to a scheduling result in each DU. The scheduling result indicates PDSCH resource allocation information. The UE may feed back HARQ-ACK information after a predetermined time from a slot in which a PDSCH is received. In a case that a plurality of cells are configured for the UE, the UE may generate a HARQ-ACK codebook. The HARQ-ACK codebook may indicate feedback for downlink data (e.g., a PDSCH, a transport block (TB), or a code block (CB)) for one or more slots in one or more CCs. For example, the UE may obtain bits indicating ACK/NACK results for data for each slot of each cell, and may generate the HARQ-ACK codebook by concatenating the obtained bits. According to a configuration of a network, the HARQ-ACK codebook may be configured as 'dynamic' or 'semi-static'. For example, in a case that the HARQ-ACK codebook is dynamically configured, each DU should know information on a PDSCH scheduled in another DU (i.e., PDSCH resource allocation information), so as to accurately deliver HARQ-related information (e.g., a new data indicator (NDI), a redundancy version (RV), a transport block size (TBS), or a HARQ process ID) to the corresponding DU. In addition, each DU should know the PDSCH resource allocation information in the another DU, so as to accurately obtain ACK/NACK for each data from the HARQ-ACK codebook.

The PDSCH resource allocation information indicates a result of PDSCH scheduling performed in each cell (e.g., a PCell or an SCell). The PDSCH resource allocation information may be used for efficient downlink transmission management. According to an embodiment, a DU may calculate a downlink assignment index (DAI) (e.g., a total DAI or a counter DAI) by using PDSCH resource allocation information of the DU and PDSCH resource allocation information of another DU. According to an embodiment, a ACK/NACK result for each cell may be obtained from the HARQ-ACK codebook from the UE by using the PDSCH resource allocation information of the DU and the PDSCH resource allocation information of the another DU.

### Uplink control information (UCI) result information

A terminal (e.g., the UE 120) may transmit UCI (e.g., HARQ-ACK, an SR, or CSI) through an uplink channel (e.g., a PUCCH or a PUSCH). The UCI result information may include at least a portion of information included in the UCI or may indicate a decoding result of the UCI. For example, a terminal for which CA is configured may transmit the UCI through a PUCCH on a PCell. A DU providing the PCell may transmit the decoding result of the UCI to a DU providing an SCell, for HARQ process management (e.g., HARQ retransmission) in the SCell. In other words, a decoding result of UCI between different DUs (e.g., parameters in CSI or feedback in a HARQ-ACK codebook) may be used for scheduling.

Hereinafter, in the present disclosure, an example in which a terminal for which CA is configured feeds back UCI in a PUCCH on a PCell is described, but embodiments of the present disclosure are not limited thereto. As a non-limiting example, even in a case that a PUCCH on an SCell is operated, UCI result information may be shared between different DUs. As a non-limiting example, the UE may also transmit the UCI through the PUSCH on the PCell.

### Discontinuous reception (DRX) status information

The DRX status information may be used to indicate a DRX status configured for a UE (e.g., the terminal 120). The UE may be in a DRX ON state or a DRX OFF state. In consideration of the DRX status configured for the UE by RRC, the DRX status information may be delivered through an interface between DUs (e.g., the X1 interface 580), so as to perform scheduling in a PCell or an SCell. For example, a DU providing the PCell may determine a DRX status in a UE unit by obtaining a DRX status or a scheduling result from a DU providing the SCell. The scheduling result may include a PDSCH allocation result and/or a PUSCH allocation result. For another example, the DU providing the SCell may determine the DRX status in the UE unit by obtaining a DRX status or a scheduling result from the DU providing the PCell. The scheduling result may include the PDSCH allocation result and/or the PUSCH allocation result.

### Beam status information

The beam status information may indicate a beam report and/or beam information (e.g., a CSI resource indicator (CRI), an SS/PBCH block resource indicator (SSBRI), or a transmission configuration indication (TCI) state)) received from a UE (e.g., the terminal 120). For example, the beam report may be beam information in a report by a measurement report or may be beam information indicated through a parameter in CSI (e.g., a CRI or an SSBRI). In CA between DUs, each of the DUs may perform scheduling reflecting a beam status in another DU through exchange of the beam status information. A PCell and an SCell may have independent beam status information.

A message transmitted on an interface between DUs (e.g., the X1 interface 580) for CA between the DUs may include a 'reserved' field. The field may have an intention for delivery of information pre-negotiated between DUs, and information delivered in the corresponding field may be differently configured according to a combination of the DUs configuring the CA. For example, a size of information included in a 'reserved' field in a message between DUs of the same vendor and a size of information included in a 'reserved' field in a message between DUs of different vendors may be different. In addition, for example, contents included in the 'reserved' field in the message between the DUs of the same vendor and contents included in the 'reserved' field in the message between the DUs of different vendors may be different. Different vendors may require different information. For example, a DU of a first vendor may require information not required in a DU of a second vendor in order to perform a specific function. Therefore, as a non-limiting example, a DU may request necessary information from another DU in a CA relationship, and in a case that the another DU accepts the request, it may transmit the necessary information to the DU. For example, in a case that 'Information A' is required in order to operate 'Function A' implemented in a DU of a vendor A, but the 'Information A' is not required in a vendor B (or in a case that it is not included in delivery information between DUs), the DU of the vendor A may request the 'Information A' from the DU of the vendor B. According to the request, the DU of the vendor B may transmit a message including the 'Information A' (hereinafter, referred to as a cooperation message).

According to a non-limiting embodiment, information requested between the DUs configuring the CA may be required to be in a designated pool (hereinafter, a cooperation message pool). This is because transmission between DUs by reflecting all requirements of vendors (e.g., required information, a delivery format, and a delivery scheme) is not efficient in terms of resource efficiency and procedure management. Through pre-negotiation between the DUs or vendors supporting the CA between the DUs, a list of information that may be delivered through a cooperation message may be configured in advance. Each DU (hereinafter, a first DU) may request exchange of a cooperation message from another DU (hereinafter, a second DU) configuring the CA. The request may indicate information required by the first DU among the information included in the list. In a case that the second DU accepts the request of the first DU, the second DU may transmit, to the first DU, a cooperation message including the information required by the first DU.

Hereinafter, based on the above-described information, procedures on an interface between DUs for downlink transmission through CA between DUs will be described.

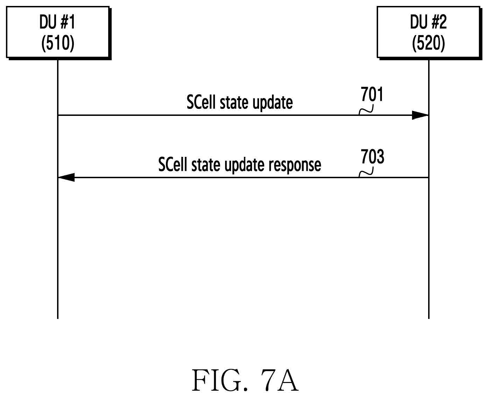

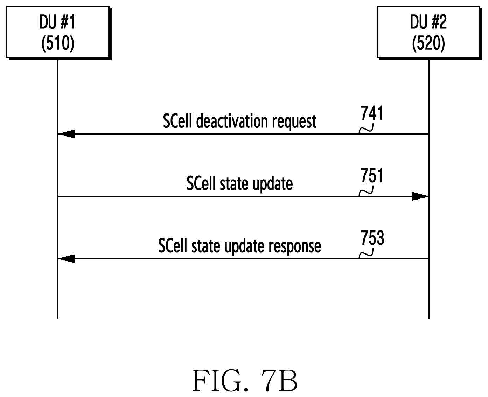

FIGS. 7A and 7B illustrate examples of a secondary cell (SCell) status update procedure. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA, and the second DU may be a node providing an SCell of the CA.

Referring to FIG. 7A, in operation 701, the DU #1 510 may transmit an SCell status update message to the DU #2 520. The SCell status update message may be used to update a status of the SCell. The DU #1 510 may notify the DU #2 520 providing the SCell of the status of the SCell. That is, the SCell status update message may be transmitted from a gNB-DU (e.g., the DU #1 510) providing the PCell (or a PSCell, which may be collectively referred to as an SpCell) to a gNB-DU (e.g., the DU #2 520) providing the SCell. For example, the DU #1 510 may determine the status of the SCell, and may transmit the determined status to the DU #2 520. As an example, the status of the SCell may indicate whether the SCell is in an activation state or in a deactivation state. For example, the SCell status update message may have the following format.

**[Table 3]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell | M | | | | | |
| index | | | | | | |
| >> SCell state | M | | ENUMERATED (DEACTIVATED, ACTIVATED, PREEMPTION OVERHEAT) | | | |
| >> Reserved | M | | | | | |

The 'UE ID' IE indicates a unique factor for identifying a UE between DUs. The 'Serving cell list' IE indicates a list of cells, and indicates an SCell status of each cell. The 'Serving cell index' IE indicates an index for distinguishing a serving cell of CA configured for the UE. The 'SCell state' IE indicates an SCell status. For example, the SCell status indicates a status of a cell (e.g., an SCell) indicated by the 'Serving cell index' IE, and the status may indicate one of a plurality of states including an activation state (e.g., 'ACTIVATED'), a deactivation state (e.g., 'DEACTIVATED'), and a preliminary state for heating mitigation (e.g., 'OVERHEAT'). The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

In operation 703, the DU #2 520 may transmit an SCell status update response message to the DU #1 510. The SCell status update response message may be used, as a response to the SCell status update message, to notify the DU #1 510 of a result of an update in the DU #2 520. A purpose of such an SCell status update procedure is to activate or deactivate the SCell. The SCell status update response message may be transmitted from the gNB-DU (e.g., the DU #2 520) providing the SCell to the gNB-DU (e.g., the DU #1 510) providing the PCell (or the PSCell, which may be collectively referred to as the SpCell). The SCell status update response message may indicate completion of the update of the SCell status. For example, the SCell status update response message may have the following format.

**[Table 4]**

| **IE/Group Name** | | **Presence** | **Range** | **IE type and reference** | **Semantics description** | **Criticality** | **Assigned Criticality** |
|---|---|---|---|---|---|---|---|
| UE list | | M | | | | | |
| > UE ID | | M | | | | | |
| > Serving cell list | | M | | | | | |
| | >> Serving cell | M | | | | | |
| index | | | | | | | |
| >> Reserved | M | | | | | | |

The 'UE ID' IE indicates a unique factor for identifying a UE between DUs. The 'Serving cell list' IE indicates a list of cells, and indicates an SCell status of each cell. The 'Serving cell index' IE indicates an index for distinguishing a serving cell of the CA configured for the UE. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

Referring to FIG. 7B, in operation 741, the DU #2 520 may transmit an SCell deactivation request message to the DU #1 510. In order to deactivate the SCell, the DU #2 520 may request deactivation from the DU #1 510 providing the PCell (or the PSCell, which may be collectively referred to as the SpCell). For example, the SCell deactivation request message may have the following format.

**[Table 5]**

| **IE/Group Name** | | **Presence** | **Range** | **IE type and reference** | **Semantics description** | **Criticality** | **Assigned Criticality** |
|---|---|---|---|---|---|---|---|
| UE list | | M | | | | | |
| > UE ID | | M | | | | | |
| > Serving cell list | | M | | | | | |
| | >> Serving cell index | M | | | | | |
| >> Reserved | | M | | | | | |

The 'UE ID' IE indicates a unique factor for identifying a UE between DUs. The 'Serving cell list' IE indicates a list of cells, and indicates an SCell status of each cell. The 'Serving cell index' IE indicates an index for distinguishing a serving cell of the CA configured for the UE. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

In operation 751, the DU #1 510 may transmit an SCell status update message to the DU #2 520. The DU #1 510 may transmit, to the DU #2 520, the SCell status update message in response to the SCell deactivation request message. In the SCell status update message, a status of the SCell provided by the DU #2 520 may be set as a deactivation state. The description of the operation 701 may be referred to for the SCell status update message.

In operation 753, the DU #2 520 may transmit an SCell status update response message to the DU #1 510. The description of the operation 703 may be referred to for the SCell status update response message.

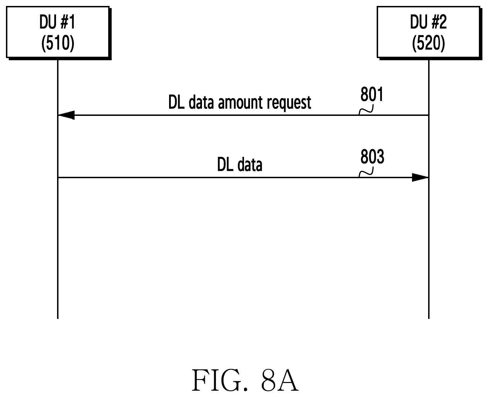

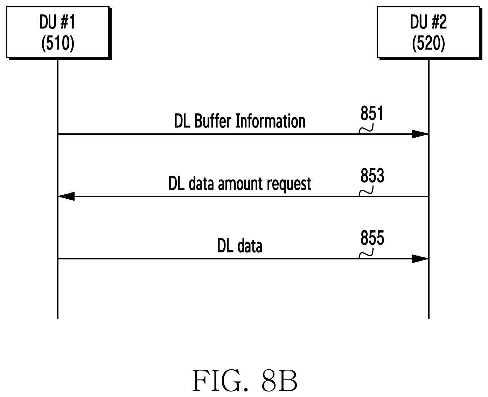

FIGS. 8A and 8B illustrate examples of a procedure of downlink data delivery. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA, and the second DU may be a node providing an SCell of the CA. Data scheduled in the SCell and transmitted to a UE (e.g., a terminal 120) may be provided from the first DU (e.g., the DU #1 510) to the second DU (e.g., the DU #2 520).

Referring to FIG. 8A, in operation 801, the DU #2 520 may transmit a request message to the DU #1 510. The request message may be used to request downlink data. The DU #2 520 providing the SCell may request, from the DU #1 510 providing the PCell (or a PSCell, which may be collectively referred to as an SpCell), downlink data to be transmitted through the SCell. For example, the DU #2 520 may request information indicating an amount of the downlink data. For example, the request message may have the following format.

**[Table 6]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Bearer list | M | | | | | |
| >> Bearer ID | M | | | | | |
| >> DL data amount | M | | | | | |
| >> Type | O | | | | | |
| >> Reserved | M | | | | | |

The 'UE ID' IE indicates a unique factor for identifying a UE between DUs. The 'Bearer list' IE indicates a list of bearer(s) (e.g., a data radio bearer (DRB)) configured for the UE, and indicates a data amount of each bearer. The 'Type' IE indicates a format of downlink data. For example, the format may indicate one of a plurality of predesignated types. The plurality of types may include a type according to a radio link control (RLC) protocol data unit (PDU), a type according to a medium access control (MAC) PDU, and/or a predefined format. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

In operation 803, the DU #1 510 may transmit a response message to the DU #2 520. The DU #1 510 providing the PCell (or a PSCell, which may be collectively referred to as an SpCell) may determine downlink data to be transmitted in the SCell based on the request. The DU #1 510 may transmit, to the DU #2 520, the response message including the downlink data. For example, the response message may have the following format.

**[Table 7]**

| **IE/Group Name** | **Presence** | **Range** | **IE type and reference** | **Semantics description** | **Criticality** | **Assigned Crditicality** |
|---|---|---|---|---|---|---|
| UE ID | M | | | | | |
| Serving cell index | M | | | | | |
| Bearer ID | M | | | | | |
| DL data | M | | | | | |
| Reserved | M | | | | | |

The 'UE ID' IE indicates a unique factor for identifying a UE between DUs. The 'Serving cell index' IE indicates an index for distinguishing a serving cell of the CA configured for the UE. The 'Bearer ID' IE indicates a bearer of downlink data to be transmitted. The 'DL data' IE indicates downlink data. The downlink data may include one or more downlink packets. The downlink data may be an RLC PDU, a MAC PDU, or a predefined format according to a type indicated in a request message. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

Referring to FIG. 8B, in operation 851, the DU #1 510 may transmit DL buffer information to the DU #2 520. Through the DL buffer information, a gNB-DU (e.g., the DU #1 510) providing the PCell (or a PSCell, which may be collectively referred to as an SpCell) may notify the gNB-DU (e.g., the DU #2 520) providing an SCell that there are currently packets requiring downlink transmission. For example, a message including the DL buffer information may have the following format.

**[Table 8]**

| **IE/Group Name** | | **Presence** | **Range** | **IE type and reference** | **Semantics description** | **Criticality** | **Assigned Criticality** |
|---|---|---|---|---|---|---|---|
| UE list | | M | | | | | |
| > UE ID | | M | | | | | |
| > Bearer list | | M | | | | | |
| | >> Bearer ID | M | | | | | |
| | >> DL buffer information | M | | | | | |
| >> Reserved | | M | | | | | |

The 'UE ID' IE indicates a unique factor for identifying a UE between DUs.

The 'Bearer list' IE indicates a list of bearer(s) (e.g., a data radio bearer (DRB)) configured for the UE, and indicates DL buffer information in each bearer. The 'DL buffer information' IE, which is DL buffer information, indicates a buffer status in the PCell. For example, the buffer status may indicate a data size included in a buffer of the PCell. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

In operation 853, the DU #2 520 may transmit a request message to the DU #1 510. After receiving the DL buffer information, the DU #2 520 may determine a necessary data amount. The DU #2 520 may notify the DU #1 510 of the necessary data amount through the request message. For the request message, the description of the request message of the operation 801 may be referred to.

In operation 855, the DU #1 510 may transmit a response message to the DU #2 520. For the response message, the description of the response message of the operation 803 may be referred to.

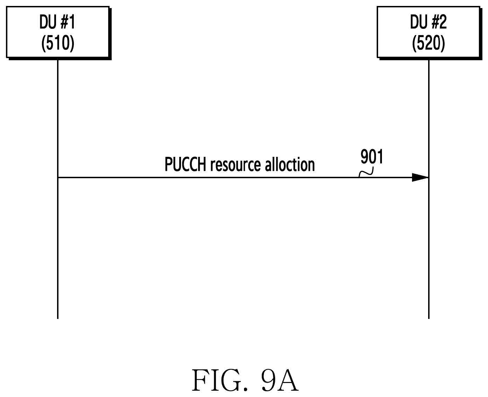

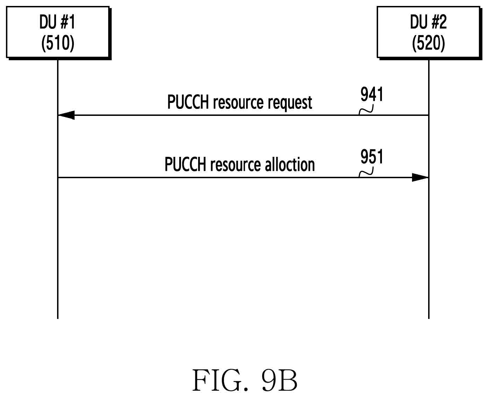

FIGS. 9A and 9B illustrate examples of a physical uplink control channel (PUCCH) resource allocation procedure. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA, and the second DU may be a node providing an SCell of the CA. A purpose of the PUCCH resource allocation procedure is to provide the DU of the SCell with a PUCCH resource of the PCell for receiving HARQ-ACK for transmission in the SCell.

Referring to FIG. 9A, in operation 901, the DU #1 510 may transmit a PUCCH resource allocation message to the DU #2 520. The PUCCH resource allocation message may be used to notify an allocation result of a PUCCH resource. The DU #1 510 may provide the DU #2 520 providing the SCell with information on a PUCCH resource in the PCell. That is, the PUCCH resource allocation message may be transmitted from a gNB-DU (e.g., the DU #1 510) providing the PCell (or a PSCell, which may be collectively referred to as an SpCell) to a gNB-DU (e.g., the DU #2 520) providing the SCell. For example, the PUCCH resource allocation message may have the following format.

**[Table 9]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > PUCCH SFN/slot information | M | | | | | |
| > PUCCH resource index | M | | | | | |
| > Reserved | M | | | | | |

The 'UE ID' IE indicates a unique factor for identifying a UE between DUs. The 'PUCCH SFN/slot information' IE indicates it. The 'PUCCH SFN/slot information' IE may indicate a system frame number (SFN) and a slot of an allocated PUCCH. The 'PUCCH resource index' IE indicates an index of a PUCCH resource. For example, a plurality of PUCCH resources (e.g., up to 8 PUCCH resources) may be configured for a UE (e.g., a terminal 120) through signaling of an RRC layer of a network. Information on the configured PUCCH resources may be provided from a call setup procedure between DUs or from a CU (e.g., a CU 505). The 'PUCCH resource index' IE may indicate information on a specific PUCCH resource among the plurality of PUCCH resources. For example, the 'PUCCH resource index' IE may indicate time information (e.g., a symbol in a slot) and frequency information of the allocated PUCCH resource. For example, the 'PUCCH resource index' IE may indicate frequency information (e.g., a start PRB location), format information (e.g., a PUCCH format 0, PUCCH format 1, a PUCCH format 2, a PUCCH format 3, or a PUCCH format 4), and/or information on whether hopping is performed. The format information may indicate a cyclic shift value, the number of symbols, and a location of a start symbol. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

Referring to FIG. 9B, in operation 941, the DU #2 520 may transmit a PUCCH resource request message to the DU #1 510. The PUCCH resource request message may be used for the gNB-DU (e.g., the DU #2 520) for transmission of downlink data in the SCell to request a PUCCH resource from the gNB-DU (e.g., the DU #1 510) providing the PCell (or a PSCell, which may be collectively referred to as an SpCell). For example, the PUCCH resource request message may have the following format.

**[Table 10]**

| **IE/Group Name** | **Presence** | **Range** | **IE type and reference** | **Semantics description** | **Criticality** | **AssignedCriticali ty** |
|---|---|---|---|---|---|---|
| UE list | M | | | | | |
| > UE ID | M | | | | | |
| > Priority | O | | | | | |
| > Time gap | O | | | | | |
| > Reserved | O | | | | | |

The 'UE ID' IE indicates a unique factor for identifying a UE between DUs. The 'Serving cell list' IE indicates a list of cells and indicates an SCell status of each cell. The 'Priority' IE may indicate a priority for PUCCH resource allocation. For example, the priority may indicate a priority for the UE among a plurality of terminals. The DU #1 510 providing the PCell may perform PUCCH resource allocation based on the priority. For example, in a case that a plurality of SCells are configured for CA, the priority may indicate a priority of a corresponding SCell among the plurality of SCells. As a non-limiting example, the PUCCH resource request message may further include an index for the SCell. For example, in a case that a plurality of DUs (including the DU #2 520) are connected to the DU providing the PCell for the CA, the priority may indicate a priority of the DU #2 520 among the plurality of DUs. As a non-limiting example, the PUCCH resource request message may further include an identifier for DU #2 520. The 'Time gap' IE may indicate a difference between PUCCH resource request time and time at which the PUCCH resource is allocated. For example, a time resource at which the PUCCH resource request message is transmitted in the second DU 520 and a time resource at which the PUCCH resource is actually allocated may be different. If DUs for the CA are provided by different vendors, time synchronization may be required. For synchronization between the two DUs in a time domain, the 'Time gap' IE may be transmitted. As an example, the difference between the PUCCH resource request time and the time at which the PUCCH resource is allocated may be indicated by a combination of at least one of a radio frame (e.g., indicated by an SFN), a slot (e.g., indicated by a slot index), and/or a symbol (e.g., indicated by a symbol index).

The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

In operation 951, the DU #1 510 may transmit a PUCCH resource allocation message to DU #2 520. The DU #1 510 may transmit, to the DU #2 520, the PUCCH resource allocation message in response to the PUCCH resource request message. For the PUCCH resource allocation message, the description of the PUCCH resource allocation message of the operation 901 may be referred to.

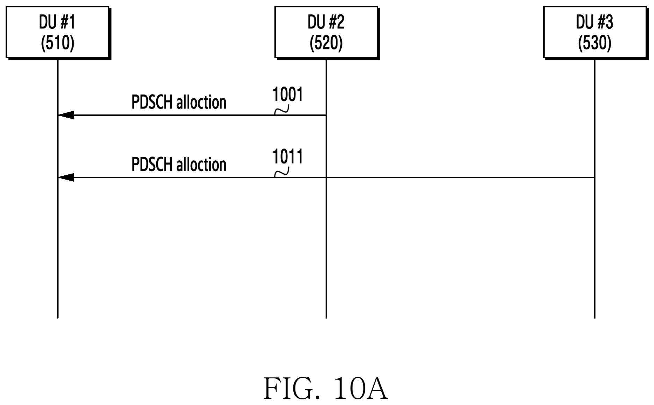

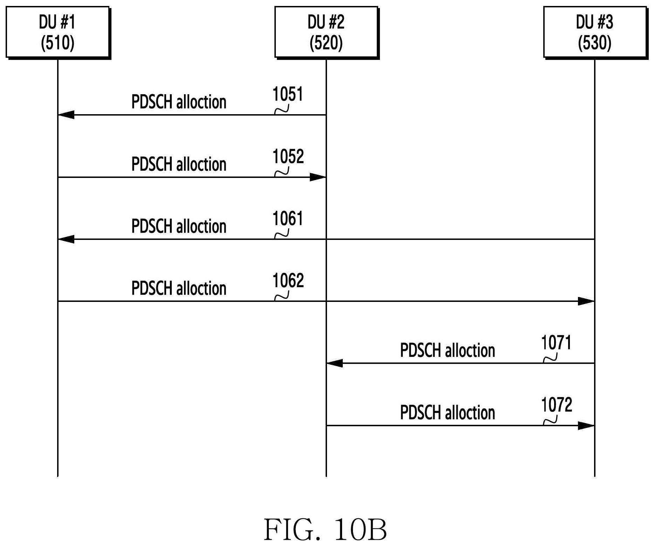

FIGS. 10A and 10B illustrate examples of a physical downlink shared channel (PDSCH) allocation procedure. For CA between DUs, a first DU (e.g., a DU #1 510) and a second DU (e.g., a DU #2 520) may perform communication through a communication interface between DUs (e.g., an X1 interface 580). Similarly, for the CA, the first DU (e.g., the DU #1 510) and a third DU (e.g., a DU #3 530) may perform communication through a communication interface between DUs (e.g., the X1 interface 580). As a non-limiting example, for the CA, the second DU (e.g., the DU #2 520) and the third DU (e.g., the DU #3 530) may perform communication through a communication interface between DUs (e.g., the X1 interface 580). For example, the first DU may be a node providing a PCell of the CA, the second DU may be a node providing an SCell of the CA, and the third DU may be a node providing an SCell of the CA.

Referring to FIG. 10A, in operation 1001, the DU #2 520 may transmit a PDSCH allocation message to the DU #1 510. In operation 1011, the DU #3 530 may transmit a PDSCH allocation message to the DU #1 510. The PDSCH allocation message may be used to provide the PCell with a scheduling result of a PDSCH in the SCell. A gNB-DU (e.g., the DU #2 520 or the DU #3 530) providing the SCell may notify, to a gNB-DU (e.g., the DU #1 510) providing the PCell (or a PSCell, which may be collectively referred to as an SpCell), a result of downlink resource allocation in the corresponding SCell. A purpose of providing the PDSCH allocation message may be for the DU #1 510 to accurately identify HARQ-ACK information on data in the SCell and to accurately determine a DAI (e.g., a total DAI or a counter DAI) for indicating the number of PDSCHs to be fed back. For example, the PDSCH allocation message may have the following format.

**[Table 11]**

| **IE/Group Name** | | **Presence** | **Range** | **IE type and reference** | **Semantics description** | **Criticality** | **Assigned Criticality** |
|---|---|---|---|---|---|---|---|
| UE list | | M | | | | | |
| > UE ID | | M | | | | | |
| > Serving cell list | | M | | | | | |
| | >> Serving cell index | M | | | | | |
| | >> PDSCH resource SFN | M | | | | | |
| | >> PDSCH resource slot information | M | | | | | |
| | >> PDSCH TBS | O | | | | | |
| | >> PDCCH symbol index | M | | | | | |
| | >> DRX status | O | | | | | |
| >> Reserved | M | | | | | | |

The 'UE ID' IE indicates a unique factor for identifying a UE between DUs. The 'Serving cell list' IE indicates a list of cells and indicates a resource allocation result in each cell. The 'PDSCH resource SFN' IE indicates a frame to which a PDSCH is allocated. The 'PDSCH resource slot information' IE indicates a slot to which the PDSCH is allocated. The 'PDSCH TBS' IE indicates a size of a transport block (TB) (i.e., transport block size (TBS)) corresponding to the allocated PDSCH. The 'PDCCH symbol index' IE indicates a symbol index of a PDCCH carrying DCI to the UE. The DCI may include a scheduling result of the PDSCH. For example, the DCI may have one format among a DCI format 1_0, a DCI format 1_1, and a DCI format 1_2. The 'DRX status' IE indicates DRX status information. The DRX status information may be used to indicate a DRX status configured for a UE (e.g., a terminal 120). The UE may be in a DRX ON state or a DRX OFF state. The DRX status information may be used to perform scheduling in a PCell or an SCell in consideration of the DRX status configured for the UE by RRC. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

Referring to FIG. 10B, not only may the node providing the SCell transmit a PDSCH allocation result to the node providing the PCell, but also the node providing the PCell may transmit the PDSCH allocation result to the node providing the SCell. In operation 1051, the DU #2 520 may transmit a PDSCH allocation message to the DU #1 510. The PDSCH allocation message may include a PDSCH scheduling result in the SCell of the DU #2 520. In operation 1052, the DU #1 510 may transmit a PDSCH allocation message to the DU #2 520. The PDSCH allocation message may include a PDSCH scheduling result in the PCell of the DU #1 510. In operation 1061, the DU #3 530 may transmit a PDSCH allocation message to the DU #1 510. The PDSCH allocation message may include a PDSCH scheduling result in the SCell of the DU #3 530. In operation 1062, the DU #1 510 may transmit a PDSCH allocation message to the DU #3 530. The PDSCH allocation message may include a PDSCH scheduling result in the PCell of the DU #1 510.

A PDSCH allocation result may be transmitted not only between the node providing the SCell and the node providing the PCell, but also between nodes providing SCells. In operation 1071, the DU #3 530 may transmit a PDSCH allocation message to the DU #2 520. The PDSCH allocation message may include the PDSCH scheduling result in the SCell of the DU #3 530. In operation 1072, the DU #2 520 may transmit a PDSCH allocation message to the DU #3 530. The PDSCH allocation message may include the PDSCH scheduling result in the SCell of the DU #2 520.

A PDSCH allocation message provided from another DU may be used, in a DU receiving the PDSCH allocation message, to decode HARQ-ACK information on a cell of the another node and to determine a DAI (e.g., a total DAI or a counter DAI).

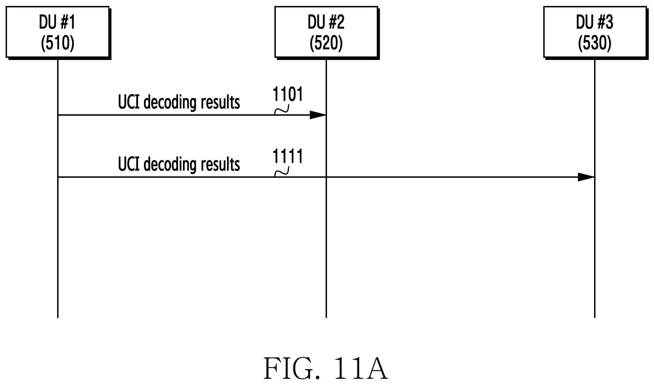

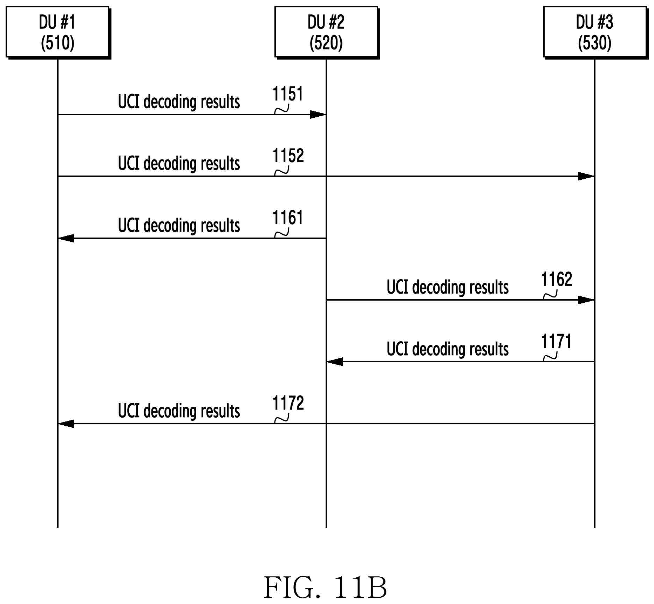

FIGS. 11A and 11B illustrate examples of an uplink control information (UCI) exchange procedure. For CA between DUs, a first DU (e.g., a DU #1 510) and a second DU (e.g., a DU #2 520) may perform communication through a communication interface between DUs (e.g., an X1 interface 580). Likewise, for the CA, the first DU (e.g., the DU #1 510) and a third DU (e.g., a DU #3 530) may perform communication through a communication interface between DUs (e.g., the X1 interface 580). As a non-limiting example, for the CA, the second DU (e.g., the DU #2 520) and the third DU (e.g., the DU #3 530) may perform communication through a communication interface between DUs (e.g., the X1 interface 580). For example, the first DU may be a node providing a PCell of the CA, the second DU may be a node providing an SCell of the CA, and the third DU may be a node providing an SCell of the CA. The UCI exchange procedure may include providing, from a DU to another DU, a result of decoding of UCI.

Referring to FIG. 11A, in operation 1101, the DU #1 510 may transmit a UCI result message to the DU #2 520. The DU #1 510 providing the PCell may obtain UCI from a UE (e.g., a terminal 120). The UCI may be transmitted through a PUCCH (or a PUSCH), and may include HARQ-ACK information, a CSI report, and/or a scheduling request (SR). The HARQ-ACK information may indicate a reception state (e.g., ACK/NACK/DTX) for each of serving cells. For example, the HARQ-ACK information may include a HARQ-ACK codebook of 3GPP NR. The CSI report may include parameters related to channel quality in a serving cell. For example, the parameters may include a channel quality indicator (CQI), a precoding matrix indicator (PMI), a rank indicator (RI), RSRP, a CRI, an SSBRI, and/or a layer indicator (LI). The DU #1 510 may decode the UCI. The DU #1 510 may transmit, to the DU #2 520, a UCI result message including a result of decoding of the UCI.

In operation 1103, the DU #1 510 may transmit a UCI result message to the DU #3 530. The DU #1 510 may decode the UCI. The DU #1 510 may transmit, to the DU #3 530, a UCI result message including a result of decoding of the UCI. For example, the UCI result message may have the following format.

**[Table 12]**

| **IE/Group Name** | | | **Presence** | **Range** | **IE type and reference** | **Semantics description** | **Criticality** | **Assigned Criticality** |
|---|---|---|---|---|---|---|---|---|
| UE list | | | M | | | | | |
| | > UE ID | | M | | | | | |
| | > Serving cell list | | M | | | | | |
| | | >> Serving cell index | M | | | | | |
| | | >> HARQ-ACK | M | | | | | |
| | | >> CSI report list | M | | | | | |
| | | >>> CSI report ID | M | | | | | |
| | | >>> CSI report | M | | | | | |
| >>> Reserved | | | M | | | | | |

The 'UE ID' IE indicates a unique factor for identifying a UE between DUs. The 'Serving cell list' IE indicates a list of cells and indicates a decoding result in each cell. The 'Serving cell index' IE indicates an index for distinguishing a serving cell of CA configured for the UE. For example, the 'Serving cell list' IE may indicate all of serving cells of the CA. For another example, the 'Serving cell list' IE may indicate only a cell of a node to which the message is delivered (e.g., the SCell of the DU #2 520). The 'HARQ-ACK' IE indicates HARQ-ACK information received from the UE. For example, the HARQ-ACK information may indicate HARQ-ACK information on the indicated serving cell (e.g., the 'Serving cell index' IE). The DU #1 510 providing the PCell may decode UCI received from the UE, and according to a result of the decoding, may identify a reception state (e.g., ACK/NACK/DTX) of the UE for a PDSCH in the serving cell. The HARQ-ACK information may indicate a reception state for the serving cell. For another example, the HARQ-ACK information may also indicate HARQ-ACK information indicated in cells configured for the CA of the UE (e.g., from a standpoint of the DU #2 520, including the PCell and even an SCell of another node (e.g., the DU #3 530)). The 'CSI report ID' indicates an ID for distinguishing a CSI report of the UE. The 'CSI report' indicates a decoding result of a CSI report received from the UE. For example, the decoding result of the CSI report may include beam status information. For example, the decoding result of the CSI report may include a CQI, a PMI, an RI, RSRP, a CRI, an SSBRI, and/or an LI. The 'reserved' IE is a reserved field and, as a non-limiting example, may include information pre-negotiated between DUs (e.g., information in a cooperation message pool). The 'M' indicates mandatory inclusion, and the 'O' indicates optional inclusion, but this indication is not interpreted as limiting other embodiments of the present disclosure.

According to an embodiment, the DU #1 510 may transmit, to each of the DU #2 520 and the DU #3 530, a UCI result message including a result of decoding of the same UCI. According to another embodiment, the DU #1 510 may transmit, to the DU #2 520, a result related to the SCell of the DU #2 520 among decoding results of the UCI. The DU #1 510 may transmit, to the DU #3 530, a result related to the SCell of the DU #3 530 among the decoding results of the UCI. In other words, the UCI result message and the decoding result in the UCI result message may be independently generated for each SCell. As a non-limiting example, the UCI result message provided to the DU providing the SCell may include only information specific to the corresponding SCell.

Referring to FIG. 11B, in operation 1151, the DU #1 510 may transmit a UCI result message to the DU #2 520. The UCI result message may indicate a decoding result of UCI received on the PCell. The DU #1 510 may transmit a UCI result message to the DU #3 530. The UCI result message may indicate a decoding result of the UCI received on the PCell.

Not only may a node providing a PCell transmit a UCI result message to a node providing an SCell, but also the node providing the SCell may transmit the UCI result message to the node providing the PCell. This is because, in a case that UL CA is configured for the UE (e.g., the terminal 120), the node providing the SCell may also receive UCI. In operation 1161, the DU #2 520 may transmit a UCI result message to the DU #1 510. The UCI result message may indicate a decoding result of UCI received on the SCell of the DU #2 520. In operation 1162, the DU #2 520 may transmit a UCI result message to the DU #3 530. The UCI result message may indicate a decoding result of the UCI received on the SCell of the DU #2 520. In operation 1171, the DU #3 530 may transmit a UCI result message to the DU #2 520. The UCI result message may indicate a decoding result of UCI received on the SCell of the DU #3 530. In operation 1172, the DU #3 530 may transmit a UCI result message to the DU #1 510. The UCI result message may indicate a decoding result of the UCI received on the SCell of the DU #3 530.

In FIGS. 11A and 11B, a decoding result of UCI has been described, but embodiments of the present disclosure are not limited thereto. In a DU, instead of transmitting a decoding result of UCI, directly transmitting UCI received from the UE to another DU may also be understood as an embodiment of the present disclosure.

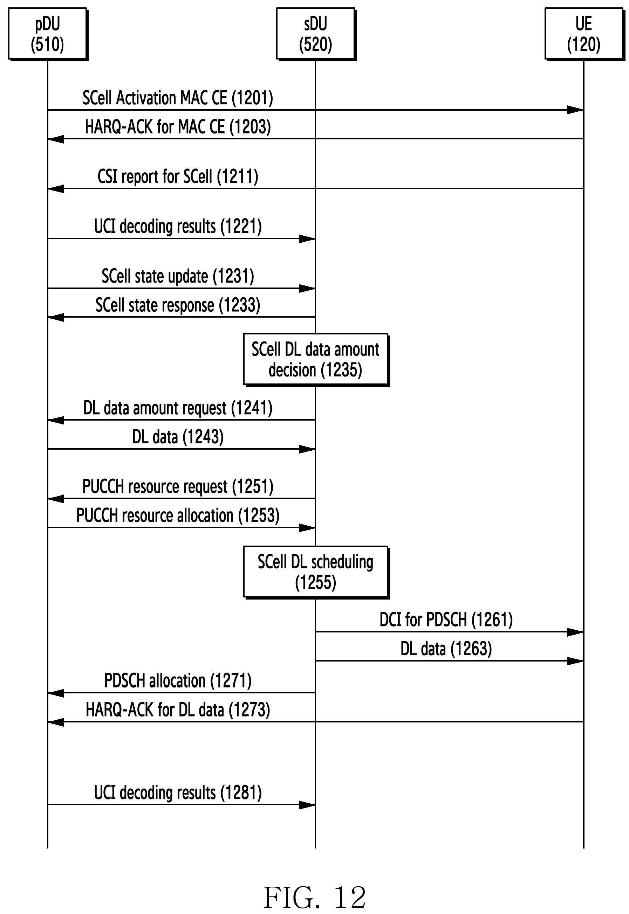

FIG. 12 illustrates an example of a signal flow between DUs for carrier aggregation (CA) between DUs. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA (hereinafter, a pDU), and the second DU may be a node providing an SCell of the CA (hereinafter, an sDU). In FIG. 12, a signal flow for NR CA between DUs is described.

Referring to FIG. 12, in operation 1201, the pDU 510 may transmit an SCell activation MAC CE to a UE 120. The SCell activation MAC CE may be control information for activating a specific SCell.

In operation 1203, the UE 120 may transmit, to the pDU 510, HARQ-ACK for the SCell activation MAC CE. Since a MAC CE is transmitted on a PDSCH of a physical layer, the UE 120 may transmit the HARQ-ACK as feedback for the MAC CE.

In operation 1211, the UE 120 may transmit, to the pDU 510, a CSI report for the SCell. While a plurality of cells may be configured for a downlink, only a PCell may be configured for an uplink. The UE 120 may receive the CSI report for the SCell through an uplink channel (e.g., a PUCCH or a PUSCH) of the PCell of the pDU 510. The UE 120 may transmit, to the pDU 510, UCI including the CSI report. For example, the CSI report may be used for scheduling. Based on the CSI report, the pDU 510 may determine CA for the PCell and the SCell.

In operation 1221, the pDU 510 may transmit, to the sDU 520, a UCI result message including a decoding result of the UCI. The pDU 510 may decode the UCI of the operation 1211. The pDU 510 may obtain parameters (e.g., a CQI, a PMI, an RI, RSRP, a CRI, an SSBRI, and/or an LI) in the CSI report by decoding the UCI. The CSI report may be used for scheduling in the SCell.

In operation 1231, the pDU 510 may transmit, to the sDU 520, an SCell status update message. For example, the pDU 510 may change a status of the SCell of the sDU 520 to an activation state. The SCell status update message may include an index indicating the SCell of the sDU 520 and information indicating the activation state. For the SCell status update message, the description for the operation 701 of FIG. 7A may be referred to.

In operation 1233, the sDU 520 may transmit, to the pDU 510, an SCell status update response message. For the SCell status update response message, the description for the operation 703 of FIG. 7A may be referred to.

In operation 1235, the sDU 520 may determine an amount of downlink data in the SCell. The sDU 520 may determine the amount of downlink data to be transmitted on the SCell. For example, the sDU 520 may determine the amount of downlink data based on the parameters (e.g., the CQI, the PMI, the RI, the RSRP, the CRI, the SSBRI, and/or the LI) in the CSI report for the SCell obtained through the operation 1221. As an example, as a CQI value decreases, it indicates a lower modulation order. The lower modulation order may indicate that an amount of data that may be transmitted on the same resource is relatively small. Similarly, since the RI indicates the number of layers capable that may be simultaneously transmitted, the number of the RI may affect the amount of downlink data.

In operation 1241, the sDU 520 may transmit, to the pDU 510, a request message. The request message may include information on an amount of downlink data (e.g., the amount of downlink data in the SCell of the operation 1235). For the request message, the description for the operation 801 of FIG. 8A may be referred to.

In operation 1243, the pDU 510 may transmit, to the sDU 520, a response message including the downlink data. For the response message, the description for the operation 803 of FIG. 8A may be referred to.

In operation 1251, the sDU 520 may transmit, to the pDU 510, a PUCCH resource request message. The sDU 520 may want to identify a PUCCH resource on which HARQ-ACK for the downlink data in the SCell will be transmitted. The sDU 520 may transmit, to the pDU 510, the PUCCH resource request message for requesting allocation of the PUCCH resource. According to an embodiment, the PUCCH resource request message may include priority information and/or time gap information. The priority information may indicate a priority for allocation of the PUCCH resource, and as an example, the priority information may indicate a priority between UEs, between SCells, and/or between DUs. The time gap information may indicate a difference between PUCCH resource request time and time at which the PUCCH resource is allocated. For the PUCCH resource request message, the description for the operation 951 of FIG. 9B may be referred to.

In operation 1253, the pDU 510 may transmit, to the sDU 520, a PUCCH resource allocation message. The PUCCH resource allocation message may include an index indicating the PUCCH resource on which the HARQ-ACK for the downlink data in the SCell will be transmitted. For the PUCCH resource allocation message, the description for the operation 901 of FIG. 9A may be referred to.

In operation 1255, the sDU 520 may perform downlink scheduling for the SCell. The sDU 520 may perform resource allocation for downlink data to be transmitted on the SCell. The sDU 520 may determine a resource region in which the downlink data will be transmitted on a time domain and a frequency domain. The sDU 520 may generate DCI including a result of the downlink scheduling.

In operation 1261, the sDU 520 may transmit, to the UE 120, DCI (e.g., a DCI format 1_0, a DCI format 1_1, or a DCI format 1_2) for resource allocation of the downlink data (e.g., a PDSCH). The pDU 510 may transmit the DCI to the UE 120 on a PDCCH. For example, the DCI may include information on time domain resource allocation and information on frequency domain resource allocation.

In operation 1263, the sDU 520 may transmit, to the UE 120, the downlink data (e.g., the PDSCH). The downlink data may be transmitted in a PDSCH region indicated through the DCI.

In operation 1271, the sDU 520 may transmit, to the pDU 510, a PDSCH allocation message. The sDU 520 may transmit, to the pDU 510, information on a resource region of a PDSCH allocated through the DCI. For the PDSCH allocation message, the description for the operation 1001 of FIG. 10A may be referred to.

In operation 1273, the UE 120 may transmit, to the pDU 510, HARQ-ACK information on the downlink data on the SCell. The UE 120 may transmit UCI including the HARQ-ACK information on an uplink channel (e.g., a PUCCH or a PUSCH). For example, the UE 120 may transmit, through a PUCCH resource, the HARQ-ACK information on the downlink data on the SCell. The PUCCH resource may be the same as the PUCCH resource in the PUCCH resource allocation message of the operation 1253. The HARQ-ACK information may indicate a reception state of the UE for the downlink data on the SCell. The reception state may include ACK, NACK, or DTX.

In operation 1281, the pDU 510 may transmit, to the sDU 520, a UCI result message including a decoding result of the UCI. The UCI may include the HARQ-ACK information on the SCell of the operation 1273. Since the UCI is transmitted to the pDU 510 providing the PCell, the pDU 510 may share, with the sDU 520 providing the SCell, the HARQ-ACK information on the SCell. The decoding result of the UCI may include the HARQ-ACK information on the SCell. The pDU 510 may transmit, to the sDU 520, the UCI result message including the HARQ-ACK information on the SCell.

Although not illustrated in FIG. 12, the sDU 520 may determine retransmission of the downlink data in the SCell according to the decoding result in the operation 1281. The sDU 520 may again request a PUCCH resource from the pDU 510. For example, the sDU 520 may transmit, to the pDU 510, a PUCCH resource request message. The pDU 510 may transmit, to the sDU 520, a PUCCH resource allocation message. Thereafter, the sDU 520 may again transmit DCI to the UE 120 on a PDCCH, and may transmit, to the UE 120 on a PDSCH, downlink data according to the DCI. The sDU 520 may transmit, to the pDU 510 through a PDSCH allocation message, a scheduling result according to the retransmission. The UE 120 may transmit, to the pDU 510, HARQ-ACK for the retransmitted downlink data on the SCell. The pDU 510 may again transmit, to the sDU 520, a decoding result for the HARQ-ACK.

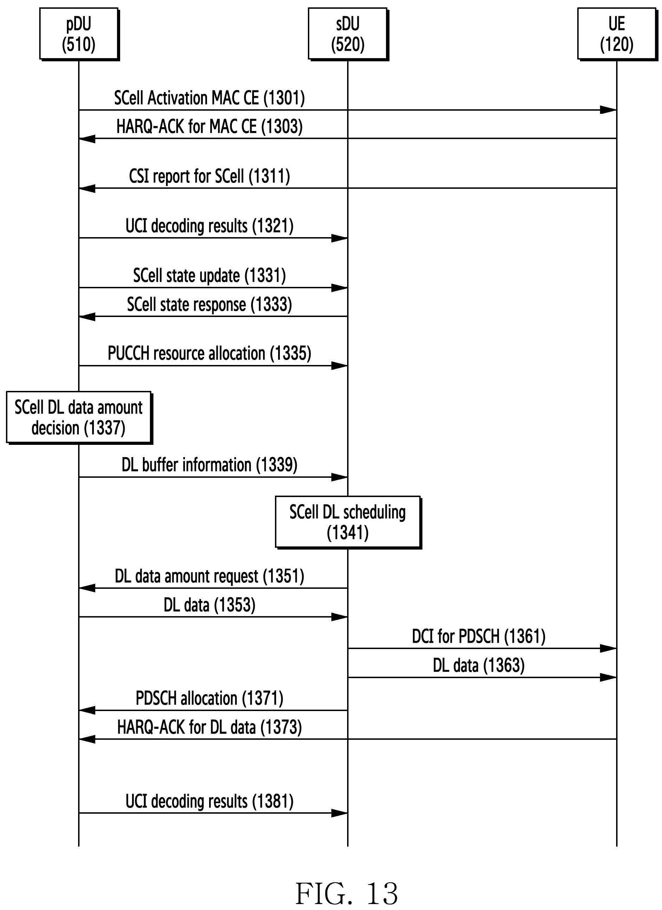

FIG. 13 illustrates an example of a signal flow between DUs for CA between DUs. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA (hereinafter, a pDU), and the second DU may be a node providing an SCell of the CA (hereinafter, an sDU). In FIG. 13, a signal flow for LTE CA between DUs is described.

Referring to FIG. 13, in operation 1301, the pDU 510 may transmit an SCell activation MAC CE to a UE 120. The SCell activation MAC CE may be control information for activating a specific SCell.

In operation 1303, the UE 120 may transmit, to the pDU 510, HARQ-ACK for the SCell activation MAC CE. Since a MAC CE is transmitted on a PDSCH of a physical layer, the UE 120 may transmit the HARQ-ACK as feedback for the MAC CE.

In operation 1311, the UE 120 may transmit, to the pDU 510, a CSI report for the SCell. While a plurality of cells may be configured for a downlink, only a PCell may be configured for an uplink. The UE 120 may receive the CSI report for the SCell through an uplink channel (e.g., a PUCCH or a PUSCH) of the PCell of the pDU 510. The UE 120 may transmit, to the pDU 510, UCI including the CSI report. For example, the CSI report may be used for scheduling. Based on the CSI report, the pDU 510 may determine CA for the PCell and the SCell.

In operation 1321, the pDU 510 may transmit, to the sDU 520, a UCI result message including a decoding result of the UCI. The pDU 510 may decode the UCI of the operation 1311. The pDU 510 may obtain parameters (e.g., a CQI, a PMI, an RI, RSRP, a CRI, an SSBRI, and/or an LI) in the CSI report by decoding the UCI. The CSI report may be used for scheduling in the SCell.

In operation 1331, the pDU 510 may transmit, to the sDU 520, an SCell status update message. For example, the pDU 510 may change a status of the SCell of the sDU 520 to an activation state. The SCell status update message may include an index indicating the SCell of the sDU 520 and information indicating the activation state. For the SCell status update message, the description for the operation 701 of FIG. 7A may be referred to.

In operation 1333, the sDU 520 may transmit, to the pDU 510, an SCell status update response message. For the SCell status update response message, the description for the operation 703 of FIG. 7A may be referred to.

In operation 1335, the pDU 510 may transmit, to the sDU 520, a PUCCH resource allocation message. The PUCCH resource allocation message may include an index indicating the PUCCH resource on which the HARQ-ACK for the downlink data in the SCell will be transmitted. For the PUCCH resource request message, the description for the operation 901 of FIG. 9A may be referred to.

In operation 1337, the pDU 510 may determine an amount of downlink data in the SCell. The pDU 510 may determine the amount of downlink data to be transmitted on the SCell. Buffer occupancy (BO) may indicate, for each logical channel, an amount of data currently queued for transmission (or retransmission) in an RLC layer. In LTE CA, the pDU 510 may determine BO for each cell. For example, the pDU 510 may determine the amount of downlink data based on the parameters (e.g., the CQI, the PMI, the RI, the RSRP, the CRI, the SSBRI, and/or the LI) in the CSI report for the SCell obtained through the operation 1311. As an example, as a CQI value decreases, it indicates a lower modulation order. The lower modulation order may indicate that an amount of data that may be transmitted on the same resource is relatively small. Similarly, since the RI indicates the number of layers capable that may be simultaneously transmitted, the number of the RI may affect the amount of downlink data.

In operation 1339, the pDU 510 may transmit, to the sDU 520, DL buffer information. Through the DL buffer information, a gNB-DU (e.g., the DU #1 510) providing the PCell (or a PSCell, which may be collectively referred to as an SpCell) may notify the gNB-DU (e.g., the DU #2 520) providing an SCell that there are currently packets requiring downlink transmission. For example, the DL buffer information may indicate a size of an amount of packets included in a buffer of the PCell.

In operation 1341, the sDU 520 may perform downlink scheduling for the SCell. The sDU 520 may perform the downlink scheduling based on the DL buffer information. The sDU 520 may perform resource allocation for downlink data to be transmitted on the SCell. The sDU 520 may determine a resource region in which the downlink data will be transmitted on a time domain and a frequency domain. The sDU 520 may generate DCI including a result of the downlink scheduling.

In operation 1351, the sDU 520 may transmit, to the pDU 510, a request message. The request message may include information on an amount of downlink data (e.g., the amount of downlink data in the SCell of the operation 1337 or the amount of packets in the DL buffer information of the operation 1339). For the request message, the description for the operation 801 of FIG. 8A may be referred to.

In operation 1353, the pDU 510 may transmit, to the sDU 520, a response message including the downlink data. For the response message, the description for the operation 803 of FIG. 8A may be referred to.

In operation 1361, the sDU 520 may transmit, to the UE 120, DCI (e.g., a DCI format 1_0, a DCI format 1_1, or a DCI format 1_2) for resource allocation of the downlink data (e.g., a PDSCH). The pDU 510 may transmit the DCI to the UE 120 on a PDCCH. For example, the DCI may include information on time domain resource allocation and information on frequency domain resource allocation.

In operation 1363, the sDU 520 may transmit, to the UE 120, the downlink data (e.g., the PDSCH). The downlink data may be transmitted in a PDSCH region indicated through the DCI.

In operation 1371, the sDU 520 may transmit, to the pDU 510, a PDSCH allocation message. The sDU 520 may transmit, to the pDU 510, information on a resource region of a PDSCH allocated through the DCI. For the PDSCH allocation message, the description for the operation 1001 of FIG. 10A may be referred to.

In operation 1373, the UE 120 may transmit, to the pDU 510, HARQ-ACK information on the downlink data on the SCell. The UE 120 may transmit UCI including the HARQ-ACK information on an uplink channel (e.g., a PUCCH or a PUSCH). For example, the UE 120 may transmit, through a PUCCH resource, the HARQ-ACK information on the downlink data on the SCell. The PUCCH resource may be the same as the PUCCH resource in the PUCCH resource allocation message of the operation 1335. The HARQ-ACK information may indicate a reception state of the UE for the downlink data on the SCell. The reception state may include ACK, NACK, or DTX.

In operation 1381, the pDU 510 may transmit, to the sDU 520, a UCI result message including a decoding result of the UCI. The UCI may include the HARQ-ACK information on the SCell of the operation 1373. Since the UCI is transmitted to the pDU 510 providing the PCell, the pDU 510 may share, with the sDU 520 providing the SCell, the HARQ-ACK information on the SCell. The decoding result of the UCI may include the HARQ-ACK information on the SCell. The pDU 510 may transmit, to the sDU 520, the UCI result message including the HARQ-ACK information on the SCell.

Although not illustrated in FIG. 13, the sDU 520 may determine retransmission of the downlink data in the SCell according to the decoding result in the operation 1381. The sDU 520 may again transmit DCI to the UE 120 on a PDCCH, and may transmit, to the UE 120 on a PDSCH, downlink data according to the DCI. The sDU 520 may transmit, to the pDU 510 through a PDSCH allocation message, a scheduling result according to the retransmission. The UE 120 may transmit, to the pDU 510, HARQ-ACK for the retransmitted downlink data on the SCell. The pDU 510 may again transmit, to the sDU 520, a decoding result for the HARQ-ACK.

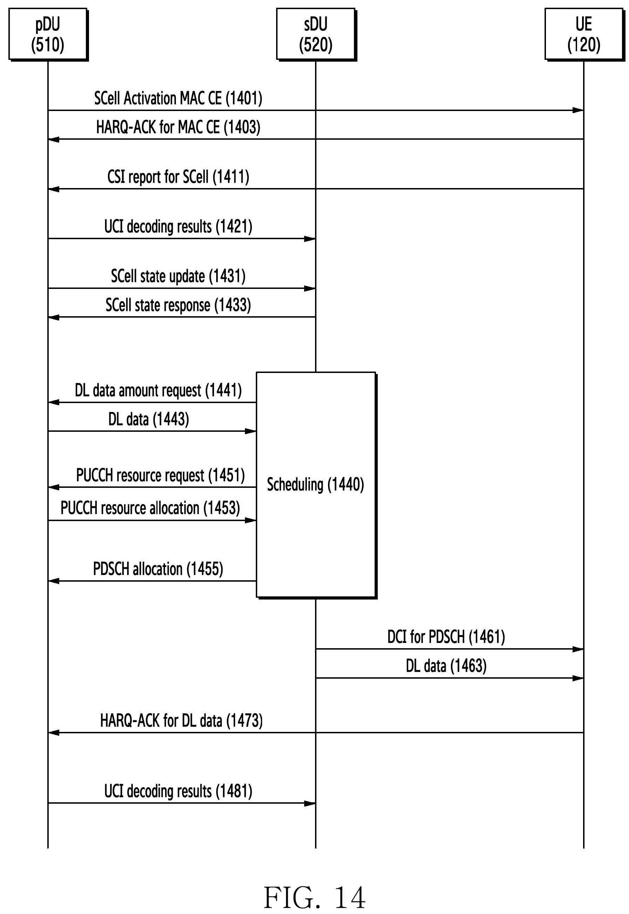

FIG. 14 illustrates an example of a signal flow between DUs for CA between DUs. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA (hereinafter, a pDU), and the second DU may be a node providing an SCell of the CA (hereinafter, an sDU). In FIG. 14, a signal flow for NR CA between DUs is described. In FIG. 14, unlike FIG. 12 (e.g., the operation 1271 of FIG. 12), a PDSCH allocation message may be transmitted even while performing downlink scheduling. As an example, the PDSCH allocation message may be provided to the pDU before DCI transmission to a terminal.

Referring to FIG. 14, in operation 1401, the pDU 510 may transmit an SCell activation MAC CE to a UE 120. The SCell activation MAC CE may be control information for activating a specific SCell.

In operation 1403, the UE 120 may transmit, to the pDU 510, HARQ-ACK for the SCell activation MAC CE. Since a MAC CE is transmitted on a PDSCH of a physical layer, the UE 120 may transmit the HARQ-ACK as feedback for the MAC CE.

In operation 1411, the UE 120 may transmit, to the pDU 510, a CSI report for the SCell. While a plurality of cells may be configured for a downlink, only a PCell may be configured for an uplink. The UE 120 may receive the CSI report for the SCell through an uplink channel (e.g., a PUCCH or a PUSCH) of the PCell of the pDU 510. The UE 120 may transmit, to the pDU 510, UCI including the CSI report. For example, the CSI report may be used for scheduling. Based on the CSI report, the pDU 510 may determine CA for the PCell and the SCell.

In operation 1421, the pDU 510 may transmit, to the sDU 520, a UCI result message including a decoding result of the UCI. The pDU 510 may decode the UCI of the operation 1411. The pDU 510 may obtain parameters (e.g., a CQI, a PMI, an RI, RSRP, a CRI, an SSBRI, and/or an LI) in the CSI report by decoding the UCI. The CSI report may be used for scheduling in the SCell.

In operation 1431, the pDU 510 may transmit, to the sDU 520, an SCell status update message. For example, the pDU 510 may change a status of the SCell of the sDU 520 to an activation state. The SCell status update message may include an index indicating the SCell of the sDU 520 and information indicating the activation state. For the SCell status update message, the description for the operation 701 of FIG. 7A may be referred to.

In operation 1433, the sDU 520 may transmit, to the pDU 510, an SCell status update response message. For the SCell status update response message, the description for the operation 703 of FIG. 7A may be referred to.

In operation 1440, the sDU 520 may perform scheduling. The sDU 520 may determine a downlink data amount in the SCell. The sDU 520 may determine an amount of downlink data to be transmitted on the SCell. The sDU 520 may perform resource allocation for the downlink data to be transmitted on the SCell. The sDU 520 may determine a resource region in which the downlink data will be transmitted on a time domain and a frequency domain. While the operation 1440 is performed, an order of operations to be described later (e.g., operation 1441, operation 1443, operation 1451, operation 1453, and operation 1455) may not affect the scheduling. The scheduling of the sDU 520 may be performed independently of a procedure with the pDU 510.

In the operation 1441, the sDU 520 may transmit, to the pDU 510, a request message. The request message may include information on an amount of downlink data (e.g., the amount of downlink data in the SCell of the operation 1440). For the request message, the description for the operation 801 of FIG. 8A may be referred to.

In the operation 1443, the pDU 510 may transmit, to the sDU 520, a response message including the downlink data. For the response message, the description for the operation 803 of FIG. 8A may be referred to.

In the operation 1451, the sDU 520 may also transmit, to the pDU 510, a PUCCH resource request message. The sDU 520 may want to identify a PUCCH resource on which HARQ-ACK for the downlink data in the PCell or the SCell will be transmitted. The sDU 520 may transmit, to the pDU 510, the PUCCH resource request message for requesting allocation of the PUCCH resource. According to an embodiment, the PUCCH resource request message may include priority information and/or time gap information. The priority information may indicate a priority for allocation of the PUCCH resource, and as an example, the priority information may indicate a priority between UEs, between SCells, and/or between DUs. The time gap information may indicate a difference between PUCCH resource request time and time at which the PUCCH resource is allocated. For the PUCCH resource request message, the description for the operation 951 of FIG. 9B may be referred to.

In the operation 1453, the pDU 510 may transmit, to the sDU 520, the PUCCH resource allocation message. The PUCCH resource allocation message may include an index indicating a PUCCH resource on which the HARQ-ACK for the downlink data in the SCell will be transmitted. The PUCCH resource may be configured on the PCell or the SCell. For the PUCCH resource allocation message, the description for the operation 901 of FIG. 9A may be referred to.

In the operation 1455, the sDU 520 may transmit, to the pDU 510, a PDSCH allocation message. The sDU 520 may transmit, to the pDU 510, information on a resource region of a PDSCH allocated through the DCI. For the PDSCH allocation message, the description for the operation 1001 of FIG. 10A may be referred to.

In operation 1461, the sDU 520 may transmit, to the UE 120, DCI (e.g., a DCI format 1_0, a DCI format 1_1, or a DCI format 1_2) for resource allocation of the downlink data (e.g., a PDSCH). The pDU 510 may transmit the DCI to the UE 120 on a PDCCH. For example, the DCI may include information on time domain resource allocation and information on frequency domain resource allocation.

In operation 1463, the sDU 520 may transmit, to the UE 120, the downlink data (e.g., the PDSCH). The downlink data may be transmitted in a PDSCH region indicated through the DCI.

In operation 1473, the UE 120 may transmit, to the pDU 510, HARQ-ACK information on the downlink data on the SCell. The UE 120 may transmit UCI including the HARQ-ACK information on an uplink channel (e.g., a PUCCH or a PUSCH). For example, the UE 120 may transmit, through a PUCCH resource, the HARQ-ACK information on the downlink data on the SCell. The HARQ-ACK information may indicate a reception state of the UE for the downlink data on the SCell. The reception state may include ACK, NACK, or DTX.

In operation 1481, the pDU 510 may transmit, to the sDU 520, a UCI result message including a decoding result of the UCI. The UCI may include the HARQ-ACK information on the SCell of the operation 1473. Since the UCI is transmitted to the pDU 510 providing the PCell, the pDU 510 may share, with the sDU 520 providing the SCell, the HARQ-ACK information on the SCell. The decoding result of the UCI may include the HARQ-ACK information on the SCell. The pDU 510 may transmit, to the sDU 520, the UCI result message including the HARQ-ACK information on the SCell.

Although not illustrated in FIG. 14, the sDU 520 may determine retransmission of the downlink data in the SCell according to the decoding result in the operation 1481. The sDU 520 may transmit, to the pDU 510 through a PDSCH allocation message, a scheduling result according to the retransmission. The sDU 520 may again transmit DCI to the UE 120 on a PDCCH, and may transmit, to the UE 120 on a PDSCH, downlink data according to the DCI. The UE 120 may transmit, to the pDU 510, HARQ-ACK for the retransmitted downlink data on the SCell. The pDU 510 may again transmit, to the sDU 520, a decoding result for the HARQ-ACK.

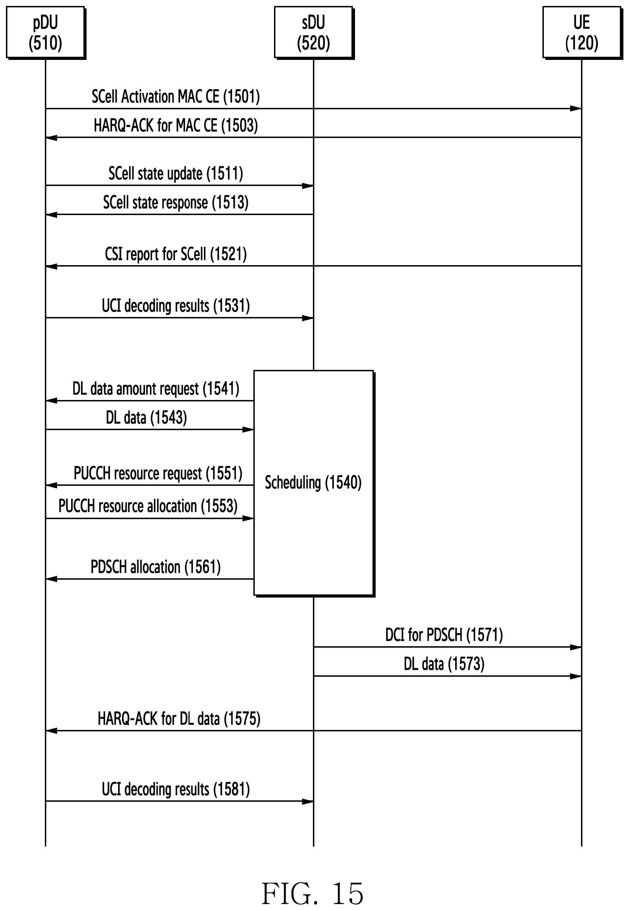

FIG. 15 illustrates an example of a signal flow between DUs for CA between DUs. For CA between DUs, a first DU (e.g., a DU #1 510) and a second DU (e.g., a DU #2 520) may perform communication through a communication interface between DUs (e.g., an X1 interface 580). For example, the first DU may be a node providing a PCell of the CA (hereinafter, a pDU), and the second DU may be a node providing an SCell of the CA (hereinafter, an sDU). In FIG. 15, a signal flow for LTE CA between DUs is described. In FIG. 15, unlike FIG. 13 (e.g., the operation 1371 of FIG. 13), a PDSCH allocation message may be transmitted even while performing downlink scheduling. As an example, the PDSCH allocation message may be provided to the pDU before DCI transmission to a terminal.

Referring to FIG. 15, in operation 1501, the pDU 510 may transmit an SCell activation MAC CE to a UE 120. The SCell activation MAC CE may be control information for activating a specific SCell.

In operation 1503, the UE 120 may transmit, to the pDU 510, HARQ-ACK for the SCell activation MAC CE. Since a MAC CE is transmitted on a PDSCH of a physical layer, the UE 120 may transmit the HARQ-ACK as feedback for the MAC CE.

In operation 1511, the pDU 510 may transmit, to the sDU 520, an SCell status update message. For example, the pDU 510 may change a status of the SCell of the sDU 520 to an activation state. The SCell status update message may include an index indicating the SCell of the sDU 520 and information indicating the activation state. For the SCell status update message, the description for the operation 701 of FIG. 7A may be referred to.

In operation 1513, the sDU 520 may transmit, to the pDU 510, an SCell status update response message. For the SCell status update response message, the description for the operation 703 of FIG. 7A may be referred to.

In operation 1521, the UE 120 may transmit, to the pDU 510, a CSI report for the SCell. While a plurality of cells may be configured for a downlink, only a PCell may be configured for an uplink. The UE 120 may receive the CSI report for the SCell through an uplink channel (e.g., a PUCCH or a PUSCH) of the PCell of the pDU 510. The UE 120 may transmit, to the pDU 510, UCI including the CSI report. For example, the CSI report may be used for scheduling. Based on the CSI report, the pDU 510 may determine CA for the PCell and the SCell.

In operation 1531, the pDU 510 may transmit, to the sDU 520, a UCI result message including a decoding result of the UCI. The pDU 510 may decode the UCI of the operation 1521. The pDU 510 may obtain parameters (e.g., a CQI, a PMI, an RI, RSRP, a CRI, an SSBRI, and/or an LI) in the CSI report by decoding the UCI. The CSI report may be used for scheduling in the SCell.

In operation 1540, the sDU 520 may perform scheduling. The sDU 520 may determine a downlink data amount in the SCell. The sDU 520 may determine an amount of downlink data to be transmitted on the SCell. The sDU 520 may perform resource allocation for the downlink data to be transmitted on the SCell. The sDU 520 may determine a resource region in which the downlink data will be transmitted on a time domain and a frequency domain. While the operation 1540 is performed, an order of operations to be described later (e.g., operation 1541, operation 1543, operation 1551, operation 1553, and operation 1555) may not affect the scheduling. The scheduling of the sDU 520 may be performed independently of a procedure with the pDU 510.

In the operation 1541, the sDU 520 may transmit, to the pDU 510, a request message. The request message may include information on an amount of downlink data (e.g., the amount of downlink data in the SCell of the operation 1540). For the request message, the description for the operation 801 of FIG. 8A may be referred to.

In the operation 1543, the pDU 510 may transmit, to the sDU 520, a response message including the downlink data. For the response message, the description for the operation 803 of FIG. 8A may be referred to.

In the operation 1551, the sDU 520 may transmit, to the pDU 510, a PUCCH resource request message. The sDU 520 may want to identify a PUCCH resource on which HARQ-ACK for the downlink data in the PCell will be transmitted. The sDU 520 may transmit, to the pDU 510, the PUCCH resource request message for requesting allocation of the PUCCH resource. According to an embodiment, the PUCCH resource request message may include priority information and/or time gap information. The priority information may indicate a priority for allocation of the PUCCH resource, and as an example, the priority information may indicate a priority between UEs, between SCells, and/or between DUs. The time gap information may indicate a difference between PUCCH resource request time and time at which the PUCCH resource is allocated. For the PUCCH resource request message, the description for the operation 951 of FIG. 9B may be referred to.

In the operation 1553, the pDU 510 may transmit, to the sDU 520, the PUCCH resource allocation message. The PUCCH resource allocation message may include an index indicating a PUCCH resource on which the HARQ-ACK for the downlink data in the SCell will be transmitted. The PUCCH resource may be configured on the PCell. For the PUCCH resource allocation message, the description for the operation 901 of FIG. 9A may be referred to.

In the operation 1561, the sDU 520 may transmit, to the pDU 510, a PDSCH allocation message. The sDU 520 may transmit, to the pDU 510, information on a resource region of a PDSCH allocated through the DCI. For the PDSCH allocation message, the description for the operation 1001 of FIG. 10A may be referred to.

In operation 1571, the sDU 520 may transmit, to the UE 120, DCI (e.g., a DCI format 1_0, a DCI format 1_1, or a DCI format 1_2) for resource allocation of the downlink data (e.g., a PDSCH). The pDU 510 may transmit the DCI to the UE 120 on a PDCCH. For example, the DCI may include information on time domain resource allocation and information on frequency domain resource allocation.

In operation 1573, the sDU 520 may transmit, to the UE 120, the downlink data (e.g., the PDSCH). The downlink data may be transmitted in a PDSCH region indicated through the DCI.

In operation 1575, the UE 120 may transmit, to the pDU 510, HARQ-ACK information on the downlink data on the SCell. The UE 120 may transmit UCI including the HARQ-ACK information on an uplink channel (e.g., a PUCCH or a PUSCH). For example, the UE 120 may transmit, through a PUCCH resource, the HARQ-ACK information on the downlink data on the SCell. The HARQ-ACK information may indicate a reception state of the UE for the downlink data on the SCell. The reception state may include ACK, NACK, or DTX.

In operation 1581, the pDU 510 may transmit, to the sDU 520, a UCI result message including a decoding result of the UCI. The UCI may include the HARQ-ACK information on the SCell of the operation 1573. Since the UCI is transmitted to the pDU 510 providing the PCell, the pDU 510 may share, with the sDU 520 providing the SCell, the HARQ-ACK information on the SCell. The decoding result of the UCI may include the HARQ-ACK information on the SCell. The pDU 510 may transmit, to the sDU 520, the UCI result message including the HARQ-ACK information on the SCell.

Although not illustrated in FIG. 15, the sDU 520 may determine retransmission of the downlink data in the SCell according to the decoding result in the operation 1581. The sDU 520 may transmit, to the pDU 510 through a PDSCH allocation message, a scheduling result according to the retransmission. The sDU 520 may again transmit DCI to the UE 120 on a PDCCH, and may transmit, to the UE 120 on a PDSCH, downlink data according to the DCI. The UE 120 may transmit, to the pDU 510, HARQ-ACK for the retransmitted downlink data on the SCell. The pDU 510 may again transmit, to the sDU 520, a decoding result for the HARQ-ACK.

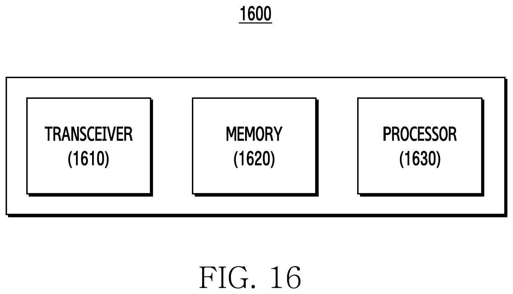

FIG. 16 illustrates an example of components of an electronic device. A structure exemplified in FIG. 16 may be understood as a configuration of a device having at least one function of the above-described PCell-DU (e.g., the DU #1 510) or SCell-DU (e.g., the DU #2 520 and the DU #3 530). Hereinafter, the terms '...unit' and '...er' used below refer to a unit processing at least one function or operation, which may be implemented by hardware or software, or a combination of hardware and software.

Referring to FIG. 16, the electronic device may include a transceiver 1610, memory 1620, and a processor 1630.

The transceiver 1610 provides an interface for performing communication with other devices in a network. That is, the transceiver 1610 converts a bit string transmitted from the electronic device to another electronic device into a physical signal, and converts a physical signal received from another electronic device into a bit string. That is, the transceiver 1610 may transmit or receive a signal. Accordingly, the transceiver 1610 may be referred to as a modem, a communication unit, a transmit unit, a receive unit, or a transmit/receive unit. At this time, the transceiver 1610 enables the electronic device to communicate with other electronic devices or a system via a backhaul connection (e.g., a wired backhaul or a wireless backhaul) or via a network. The transceiver 1610 may include one or more transceivers.

The memory 1620 stores data such as a basic program, an application program, and configuration information for an operation of the electronic device. The memory 1620 may be configured as a volatile memory, a non-volatile memory, or a combination of the volatile memory and the non-volatile memory. In addition, the memory 1620 provides stored data according to a request of the processor 1630. The memory 1620 may be referred to as a storage unit.

The processor 1630 controls overall operations of the electronic device. For example, the processor 1630 transmits and receives a signal through the transceiver 1610. In addition, the processor 1630 writes and reads data to and from the memory 1620. The processor 1630 may be referred to as a control unit. To this end, the processor 1630 may be configured with a plurality of processors, or may include at least one sub-processor. According to various embodiments, the processor 1630 may control the electronic device to perform operations according to various embodiments described in the present disclosure.

Unlike CA using cells in the same DU, in the present disclosure, a technology for CA between different DUs has been described. Even in a case of DUs between different operators, CA between DUs may be operated through the procedures described through FIGS. 5 to 15, message formats defined in each procedure, and information in the corresponding message format. Through CA between DUs, a capacity of a network in a cell may increase.

The effects that may be obtained from the present disclosure are not limited to those described above, and any other effects not mentioned herein will be clearly understood by those having ordinary knowledge in the art to which the present disclosure belongs, from the following description.

In embodiments, a method performed by a first distributed unit (DU) providing a primary cell (PCell) is provided. The method may comprise receiving, from a second DU providing a secondary cell (SCell) through a communication interface between the first DU and the second DU, a request message for downlink data. The method may comprise transmitting, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the method may comprise receiving, from the second DU through the communication interface, an allocation request message for a physical uplink control channel (PUCCH) resource. The method may comprise transmitting, through the communication interface to the second DU, a PUCCH resource allocation message as a response of the allocation request message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the method may comprise receiving, from the second DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the method may comprise transmitting, through the communication interface to the second DU, an uplink control information (UCI) result message. The UCI result message may include the UE ID, an index for indicting the SCell, hybrid automatic request-acknowledge (HARQ-ACK) information for the SCell, and information on a CSI report for the SCell.

For example, the method may comprise transmitting, through the communication interface to the second DU, a SCell status update message. The method may comprise receiving, from the second DU through the communication interface, a SCell status update response message, as a response of the SCell status update message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, a method performed by a second distributed unit (DU) providing a secondary cell (SCell) and connected to a first distributed unit (DU) providing a primary cell (PCell) is provided. The method may comprise transmitting, to the first DU through a communication interface between the first DU and the second DU, a request message for downlink data. The method may comprise receiving, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the method may comprise transmitting, to the first DU through the communication interface, an allocation request message for a physical uplink control channel (PUCCH) resource. The method may comprise receiving, from the second DU through the communication interface, a PUCCH resource allocation message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the method may comprise transmitting, to the first DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the method may comprise receiving, from the first DU through the communication interface, an uplink control information (UCI) result message. The UCI result message may include the UE ID, an index for indicting the SCell, hybrid automatic request-acknowledge (HARQ-ACK) information for the SCell, and information on a channel state information (CSI) report for the SCell.

For example, the method may comprise receiving, from the first DU through the communication interface, a SCell status update message. The method may comprise transmitting, to the first DU through the communication interface, a SCell status update response message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, an electronic device of a first distributed unit (DU) providing a primary cell (PCell) is provided. The electronic device may comprise at least one processor comprising processing circuitry. The electronic device may comprise memory, comprising one or more storage mediums, storing instructions. The instructions, when executed by the at least one processor individual or collectively, may cause the first DU to receive, from a second DU providing a secondary cell (SCell) through a communication interface between the first DU and the second DU, a request message for downlink data, and transmit, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the instructions, when executed by the at least one processor individual or collectively, may cause the first DU to receive, from the second DU through the communication interface, an allocation request message for a physical uplink control channel (PUCCH) resource, and transmit, through the communication interface to the second DU, a PUCCH resource allocation message as a response of the allocation request message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the instructions, when executed by the at least one processor individual or collectively, may cause the first DU to receive, from the second DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the instructions, when executed by the at least one processor individual or collectively, may cause the first DU to transmit, through the communication interface to the second DU, an uplink control information (UCI) result message. The UCI result message may include the UE ID, an index for indicting the SCell, hybrid automatic request-acknowledge (HARQ-ACK) information for the SCell, and information on a channel state information (CSI) report for the SCell.

For example, the instructions, when executed by the at least one processor individual or collectively, may cause the first DU to transmit, through the communication interface to the second DU, a SCell status update message, and receive, from the second DU through the communication interface, a SCell status update response message, as a response of the SCell status update message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, an electronic device of a second distributed unit (DU) providing a secondary cell (SCell) and connected to a first distributed unit (DU) providing a primary cell (PCell) is provided. The electronic device may comprise at least one processor comprising processing circuitry. The electronic device may store instructions and may comprise one or more storage mediums. It may comprise memory. The instructions, when executed by the at least one processor individual or collectively, may cause the second DU to transmit to the first DU through a communication interface between the first DU and the second DU, a request message for downlink data, and receive, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the instructions, when executed by the at least one processor individual or collectively, may cause the second DU to transmit, to the first DU through the communication interface, an allocation request message for a physical uplink control channel (PUCCH) resource, and receive, from the second DU through the communication interface, a PUCCH resource allocation message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the instructions, when executed by the at least one processor individual or collectively, may cause the second DU to transmit, to the first DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the instructions, when executed by the at least one processor individual or collectively, may cause the second DU to receive, from the first DU through the communication interface, an uplink control information (UCI) result message. The UCI result message may include the UE ID, an index for indicting the SCell, hybrid automatic request-acknowledge (HARQ-ACK) information for the SCell, and information on a channel state information (CSI) report for the SCell.

For example, the instructions, when executed by the at least one processor individual or collectively, may cause the second DU to receive, from the first DU through the communication interface, a SCell status update message, and transmit, to the first DU through the communication interface, a SCell status update response message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, an electronic device of a first distributed unit (DU) providing a primary cell (PCell) is provided. The electronic device may comprise at least one processor comprising processing circuitry. The at least one processor may be configured such that the first DU receives, from a second DU providing a secondary cell (SCell) through a communication interface between the first DU and the second DU, a request message for downlink data, and transmits, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the at least one processor may be configured such that the first DU receives, from the second DU through the communication interface, an allocation request message for a physical uplink control channel (PUCCH) resource, and transmits, through the communication interface to the second DU, a PUCCH resource allocation message as a response of the allocation request message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the at least one processor may be configured such that the first DU receives, from the second DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the at least one processor may be configured such that the first DU transmits, through the communication interface to the second DU, an uplink control information (UCI) result message. The UCI result message may include the UE ID, an index for indicting the SCell, hybrid automatic request-acknowledge (HARQ-ACK) information for the SCell, and information on a channel state information (CSI) report for the SCell.

For example, the at least one processor may be configured such that the first DU transmits, through the communication interface to the second DU, a SCell status update message, and receives, from the second DU through the communication interface, a SCell status update response message, as a response of the SCell status update message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, an electronic device of a second distributed unit (DU) providing a secondary cell (SCell) and connected to a first distributed unit (DU) providing a primary cell (PCell) is provided. The electronic device may comprise at least one processor comprising processing circuitry. The at least one processor may be configured such that the second DU transmits to the first DU through a communication interface between the first DU and the second DU, a request message for downlink data, and receives, from the first DU through the communication interface, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For example, the at least one processor may be configured such that the second DU transmits, to the first DU through the communication interface, an allocation request message for a physical uplink control channel (PUCCH) resource, and receives, from the second DU through the communication interface, a PUCCH resource allocation message. The allocation request message may include the UE ID, priority information for PUCCH resource allocation, and time gap information for a difference between allocation request time and allocation time. The allocation message may include a system frame number (SFN), a slot index, and a PUCCH resource index.

For example, the at least one processor may be configured such that the second DU transmits, to the first DU through the communication interface, a physical downlink shared channel (PDSCH) allocation message. The PDSCH allocation message may include the UE ID, an index for indicting the SCell, time resource information for a PDSCH allocated for the SCell, discontinuous reception (DRX) status information in the SCell, a transport block size (TBS) for a PDSCH allocated for the SCell.

For example, the at least one processor may be configured such that the second DU receives, from the first DU through the communication interface, an uplink control information (UCI) result message. The UCI result message may include the UE ID, an index for indicting the SCell, hybrid automatic request-acknowledge (HARQ-ACK) information for the SCell, and information on a channel state information (CSI) report for the SCell.

For example, the at least one processor may be configured such that the second DU receives, from the first DU through the communication interface, a SCell status update message, and transmits, to the first DU through the communication interface, a SCell status update response message. The SCell status update message may include the UE ID, an index for indicting the SCell, and status information for the SCell. The SCell status update response message may include the UE ID and the index for indicting the SCell. The status information for the SCell may indicate one of a plurality of states including an activation state, a deactivation state, and a preliminary state for heating mitigation.

In embodiments, a non-transitory computer-readable storage medium is provided. The non-transitory computer-readable storage medium may comprise one or more storage mediums storing instructions. The instructions, when executed by at least one processor individually or collectively, may be configured such that a first distributed unit (DU) providing a primary cell (PCell) receives, from a second DU providing a secondary cell (SCell), through a communication interface between the first DU and the second DU, a request message for downlink data, and transmits, through the communication interface to the second DU, a response message as a response of the request message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

In embodiments, a non-transitory computer-readable storage medium is provided. The non-transitory computer-readable storage medium may comprise one or more storage mediums storing instructions. The instructions, when executed by at least one processor individually or collectively, may cause, a second distributed unit (DU) providing a secondary cell (SCell) and connected to a first distributed unit (DU) providing a primary cell (PCell), to transmit, to the first DU through a communication interface between the first DU and the second DU, a request message for downlink data, and receive, from the first DU through the communication interface, a response message. The request message may include a user equipment (UE) identity (ID), a bearer ID, information on a downlink data amount, and information on a data type. The response message may include the UE ID, the bearer ID, an index for indicating the SCell, and the downlink data. The data type may indicate one of a plurality of types including a first type for a radio link control (RLC) protocol data unit (PDU) and a second type for a medium access control (MAC) PDU.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by a first distributed unit (DU) providing a primary cell (PCell), the method comprising:
receiving, from a second DU providing a secondary cell (SCell) through an interface between the first DU and the second DU, a request message for downlink data; and
transmitting, through the interface to the second DU, a response message as a response of the request message,
wherein the request message includes a user equipment (UE) identity (ID), a bearer ID, information on a downlink data amount, and information on a data type,
wherein the response message includes the UE ID, the bearer ID, an index for indicating the SCell, and the downlink data, and
wherein the data type indicates one of a plurality of types including a first type for a radio link control (RLC) protocol data unit (PDU) and a second type for a medium access control (MAC) PDU.

2. The method of claim 1, further comprising:
receiving, from the second DU through the interface, an allocation request message for a physical uplink control channel (PUCCH) resource; and
transmitting, through the interface to the second DU, a PUCCH resource allocation message as a response of the allocation request message,
wherein the allocation request message includes the UE ID, priority information for PUCCH resource allocation, and time gap information for a difference between allocation request time and allocation time, and
wherein the PUCCH resource allocation message includes a system frame number (SFN), a slot index, and a PUCCH resource index.

3. The method of claim 1, further comprising:
receiving, from the second DU through the interface, a physical downlink shared channel (PDSCH) allocation message;
wherein the PDSCH allocation message includes the UE ID, an index for indicting the SCell, time resource information for a PDSCH allocated for the SCell, discontinuous reception (DRX) status information in the SCell, a transport block size (TBS) for a PDSCH allocated for the SCell.

4. The method of claim 1, further comprising:
transmitting, through the interface to the second DU, an uplink control information (UCI) result message,
wherein the UCI result message includes the UE ID, an index for indicting the SCell, hybrid automatic request-acknowledge (HARQ-ACK) information for the SCell, and information on a channel state information (CSI) report for the SCell.

5. The method of claim 1, further comprising:
transmitting, through the interface to the second DU, a SCell status update message; and
receiving, from the second DU through the interface, a SCell status update response message, as a response of the SCell status update message,
wherein the SCell status update message includes the UE ID, an index for indicting the SCell, and status information for the SCell,
wherein the SCell status update response message includes the UE ID and the index for indicting the SCell, and
wherein the status information for the SCell indicates one of a plurality of states including an activation state, a deactivation state, and a state for heating mitigation.

6. A method performed by a second distributed unit (DU) providing a secondary cell (SCell) and connected to a first distributed unit (DU) providing a primary cell (PCell), the method comprising:
transmitting, to the first DU through an interface between the first DU and the second DU, a request message for downlink data; and
receiving, from the first DU through the interface, a response message as a response of the request message,
wherein the request message includes a user equipment (UE) identity (ID), a bearer ID, information on a downlink data amount, and information on a data type,
wherein the response message includes the UE ID, the bearer ID, an index for indicating the SCell, and the downlink data, and
wherein the data type indicates one of a plurality of types including a first type for radio link control (RLC) protocol data unit (PDU) and a second type for a medium access control (MAC) PDU.

7. The method of claim 6, further comprising:
transmitting, to the first DU through the interface, an allocation request message for a physical uplink control channel (PUCCH) resource; and
receiving, from the second DU through the interface, a PUCCH resource allocation message,
wherein the allocation request message includes the UE ID, priority information for PUCCH resource allocation, and time gap information for a difference between allocation request time and allocation time, and
wherein the PUCCH allocation message includes a system frame number (SFN), a slot index, and a PUCCH resource index.

8. The method of claim 6, further comprising:
transmitting, to the first DU through the interface, a physical downlink shared channel (PDSCH) allocation message,
wherein the PDSCH allocation message includes the UE ID, an index for indicting the SCell, time resource information for a PDSCH allocated for the SCell, discontinuous reception (DRX) status information in the SCell, a transport block size (TBS) for a PDSCH allocated for the SCell.

9. The method of claim 6, further comprising:
receiving, from the first DU through the interface, an uplink control information (UCI) result message,
wherein the UCI result message includes the UE ID, an index for indicting the SCell, hybrid automatic request-acknowledge (HARQ-ACK) information for the SCell, and information on a channel state information (CSI) report for the SCell.

10. The method of claim 6, further comprising:
receiving, from the first DU through the interface, a SCell status update message; and
transmitting, to the first DU through the interface, a SCell status update response message,
wherein the SCell status update message includes the UE ID, an index for indicting the SCell, and status information for the SCell,
wherein the SCell status update response message includes the UE ID and the index for indicting the SCell, and
wherein the status information for the SCell indicates one of a plurality of states including an activation state, a deactivation state, and a state for heating mitigation.

11. An electronic device of a first distributed unit (DU) providing a primary cell (PCell), the electronic device comprising:
at least one processor comprising processing circuitry; and
memory, comprising one or more storage mediums, storing instructions,
wherein the instructions, when executed by the at least one processor individual or collectively, cause the first DU to:
receive, from a second DU providing a secondary cell (SCell) through an interface between the first DU and the second DU, a request message for downlink data, and
transmit, through the interface to the second DU, a response message as a response of the request message,
wherein the request message includes a user equipment (UE) identity (ID), a bearer ID, information on a downlink data amount, and information on a data type,
wherein the response message includes the UE ID, the bearer ID, an index for indicating the SCell, and the downlink data, and
wherein the data type indicates one of a plurality of types including a first type for radio link control (RLC) protocol data unit (PDU) and a second type for a medium access control (MAC) PDU.

12. The electronic device of claim 11, wherein the instructions, when executed by the at least one processor individual or collectively, cause the first DU to:
receive, from the second DU through the interface, an allocation request message for a physical uplink control channel (PUCCH) resource, and
transmit, through the interface to the second DU, a PUCCH resource allocation message as a response of the allocation request message,
wherein the allocation request message includes the UE ID, priority information for PUCCH resource allocation, and time gap information for a difference between allocation request time and allocation time, and
wherein the allocation message includes a system frame number (SFN), a slot index, and a PUCCH resource index.

13. The electronic device of claim 11,
wherein the instructions, when executed by the at least one processor individual or collectively, cause the first DU to receive, from the second DU through the interface, a physical downlink shared channel (PDSCH) allocation message, and
wherein the PDSCH allocation message includes the UE ID, an index for indicting the SCell, time resource information for a PDSCH allocated for the SCell, discontinuous reception (DRX) status information in the SCell, a transport block size (TBS) for a PDSCH allocated for the SCell.

14. The electronic device of claim 11,
wherein the instructions, when executed by the at least one processor individual or collectively, cause the first DU to transmit, through the interface to the second DU, an uplink control information (UCI) result message, and
wherein the UCI result message includes the UE ID, an index for indicting the SCell, hybrid automatic request-acknowledge (HARQ-ACK) information for the SCell, and information on a channel state information (CSI) report for the SCell.

15. The electronic device of claim 11, wherein the instructions, when executed by the at least one processor individual or collectively, cause the first DU to:
transmit, through the interface to the second DU, a SCell status update message, and
receive, from the second DU through the interface, a SCell status update response message, as a response of the SCell status update message,
wherein the SCell status update message includes the UE ID, an index for indicting the SCell, and status information for the SCell,
wherein the SCell status update response message includes the UE ID and the index for indicting the SCell, and
wherein the status information for the SCell indicates one of a plurality of states including an activation state, a deactivation state, and a state for heating mitigation.
